(19) [European Patent Office logo]

Europäisches Patentamt

European Patent Office

Office européen des brevets

(11) **EP 2 838 263 A1**

(12) **EUROPEAN PATENT APPLICATION**
published in accordance with Art. 153(4) EPC

(43) Date of publication:
**18.02.2015 Bulletin 2015/08**

(51) Int Cl.:
***H04N 7/36*** (0000.00)

(21) Application number: **13778181.1**

(22) Date of filing: **12.04.2013**

(86) International application number:
**PCT/KR2013/003083**

(87) International publication number:
**WO 2013/157783 (24.10.2013 Gazette 2013/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.04.2012 US 201261624355 P**

(71) Applicant: **Samsung Electronics Co., Ltd.**
**Suwon-si, Gyeonggi-do, 443-742 (KR)**

(72) Inventors:
• **LEE, Tammy**
  **Seoul 137-070 (KR)**
• **PARK, Young-o**
  **Seoul 137-140 (KR)**

(74) Representative: **Instone, Terry**
**Appleyard Lees**
**15 Clare Road**
**Halifax HX1 2HY (GB)**

(54) **INTER PREDICTION METHOD IN WHICH REFERENCE PICTURE LISTS CAN BE CHANGED AND APPARATUS FOR SAME**

(57) A method and apparatus for inter prediction using modification of a reference picture list are provided. A method of efficiently encoding, transmitting, receiving, and reading information related to modification of a reference picture list is also provided. An inter prediction method includes determining whether a restriction condition exists for identity of reference picture lists of slices of the same slice type among slices included in a same picture; determining a modification possibility of reference picture lists determined in a same slice; and determining reference picture lists for blocks in an inter mode that belong to the same slice based on the determination of whether the restriction condition exists and the determined modification possibility of the reference picture lists.

## FIG. 1A

EP 2 838 263 A1

**Description**

TECHNICAL FIELD

The present invention relates to video prediction and video encoding and decoding that are accompanied by video prediction.

BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a macroblock having a predetermined size.

A video codec reduces an amount of encoded data by using a prediction method based on a characteristic whereby video images are temporally or spatially correlated to each other. According to the prediction method, to predict a current image by using peripheral images, temporal distances or spatial distances and prediction errors between images are used to record image information.

DETAILED DESCRIPTION OF THE INVENTION

TECHNICAL PROBLEM

The present invention provides a method and apparatus for inter prediction using modification of a reference picture list.

The present invention also provides a method of efficiently encoding, transmitting, receiving, and reading information related to modification of a reference picture list.

TECHNICAL SOLUTION

According to an aspect according to the present invention, there is provided an inter prediction method including determining whether a restriction condition exists for identity of reference picture lists of slices of the same slice type among slices included in a same picture; determining a modification possibility of reference picture lists determined in a same slice; and determining reference picture lists for blocks in an inter mode that belong to the same slice based on the determination of whether the restriction condition exists and the determined modification possibility of the reference picture lists.

ADVANTAGEOUS EFFECTS

Inter prediction according to the present invention determines a modification possibility of a reference picture list, independently from whether there is a restriction condition that limits the reference picture list according to slice types, and thus a process of transmitting information related to an unnecessary reference picture list is omitted, thereby reducing a transmission bit rate. Also, a process of parsing the information related to the unnecessary reference picture list is omitted, thereby reducing a data parsing process.

DESCRIPTION OF THE DRAWINGS

FIG. 1A is a block diagram of an inter prediction apparatus according to an embodiment;
FIG. 1B is a flowchart of an inter prediction method according to an embodiment;
FIG. 2A is a block diagram of a motion prediction apparatus corresponding to an inter prediction apparatus according to an embodiment;
FIG. 2B is a flowchart of a motion prediction method of performing an inter prediction method according to an embodiment;
FIG. 3A is a block diagram of a motion compensation apparatus corresponding to an inter prediction apparatus according to an embodiment;
FIG. 3B is a flowchart of a motion compensation method of performing an inter prediction method according to an embodiment;

FIG. 4 is a diagram of a syntax of a sequence parameter set (SPS) according to an embodiment;

FIG. 5 is a diagram of a syntax of a SPS according to another embodiment;

FIG. 6 is a diagram of a syntax of a SPS according to another embodiment;

FIG. 7 is a diagram of a syntax of a parameter set related to a combination of reference picture lists according to another embodiment;

FIG. 8 is a diagram of a syntax of a parameter set related to a modification of reference picture lists according to another embodiment;

FIG. 9 is a block diagram of a video encoding apparatus accompanied by video prediction based on coding units having a tree structure according to an embodiment;

FIG. 10 is a block diagram of a video decoding apparatus accompanied by video prediction based on coding units having a tree structure according to an embodiment;

FIG. 11 is a diagram for describing a concept of coding units according to an embodiment;

FIG. 12 is a block diagram of an image encoder based on coding units according to an embodiment;

FIG. 13 is a block diagram of an image decoder based on coding units according to an embodiment;

FIG. 14 is a diagram illustrating deeper coding units according to depths, and partitions according to an embodiment;

FIG. 15 is a diagram for describing a relationship between a coding unit and transformation units, according to an embodiment;

FIG. 16 is a diagram for describing encoding information of coding units corresponding to a coded depth, according to an embodiment;

FIG. 17 is a diagram of deeper coding units according to depths, according to an embodiment;

FIGS. 18 through 20 are diagrams for describing a relationship between coding units, prediction units, and transformation units, according to an embodiment of the present invention;

FIG. 21 is a diagram for describing a relationship between a coding unit, a prediction unit or a partition, and a transformation unit, according to encoding mode information of Table 1;

FIG. 22 illustrates a physical structure of a disc that stores a program, according to an embodiment of the present invention;

FIG. 23 illustrates a disc drive that records and reads a program by using a disc;

FIG. 24 illustrates an entire structure of a content supply system that provides a content distribution service;

FIGS. 25 and 26 illustrate external and internal structures of a mobile phone to which a video encoding method and a video decoding method are applied, according to an embodiment of the present invention;

FIG. 27 illustrates a digital broadcasting system employing a communication system, according to an embodiment of the present invention; and

FIG. 28 illustrates a network structure of a cloud computing system using a video encoding apparatus and a video decoding apparatus, according to an embodiment of the present invention.

BEST MODE

According to an aspect according to the present invention, there is provided an inter prediction method including: determining whether a restriction condition exists for identity of reference picture lists of slices of the same slice type among slices included in a same picture; determining a modification possibility of reference picture lists determined in a same slice; and determining reference picture lists for blocks in an inter mode that belong to the same slice based on the determination of whether the restriction condition exists and the determined modification possibility of the reference picture lists.

The determining of the modification possibility of the reference picture lists may include: independently from the determination of whether the restriction condition exists, determining the modification possibility of the reference picture lists.

The determining of whether the restriction condition exists may include: determining whether the restriction condition exists for reference picture lists determined for blocks that belong to a same sequence, and wherein the determining of the modification possibility of the reference picture lists includes: determining the modification possibility of the reference picture lists determined for the blocks that belong to the same sequence.

The determining of the modification possibility of the reference picture lists may include: independently from the modification possibility of the reference picture lists, determining a combination possibility of a first reference picture list and a second reference picture list that are determined for the blocks that belong to the same slice.

The determining of the combination possibility may include: if it is possible to combine reference picture lists determined in a current slice, determining whether reference picture lists exists, the reference picture lists combined by using reference pictures of the first reference picture list and the second reference picture list for each slice; and if there are combined reference picture lists determined in the current slice, determining a modification possibility of the combined reference picture lists for each slice.

According to another aspect according to the present invention, there is provided an inter prediction apparatus including: a reference picture list determiner for determining whether a restriction condition exists for identity of reference picture lists of slices of a same slice type among slices included in a same picture, determining a modification possibility of reference picture lists determined in the same slice, and determining reference picture lists for blocks in an inter mode that belong to the same slice based on the determination of whether the restriction condition exists and the determined modification possibility of the reference picture lists; and an inter predictor for performing inter prediction for each of the blocks by using the determined reference picture lists.

The reference picture list determiner may determine at least one of a first reference picture list and a second reference picture list by using a reference index determined for each of the blocks in the inter mode that belong to the picture, and determines at least one reference picture for each of the blocks by using at least one of the determination of whether the restriction condition exists, the determined modification possibility, and the determined at least one of the first reference picture list and the second reference picture list, and wherein the inter predictor performs motion compensation by using the determined at least one reference picture for each of the blocks, a motion vector, and a residue, and generates a reconstruction image.

The reference picture list determiner may determine at least one of a first reference picture list and a second reference picture list by using a reference index determined for each of the blocks in the inter mode that belong to the picture, and determines at least one reference picture for each of the blocks by using at least one of the determination of whether the restriction condition exists, the determined modification possibility, and the determined at least one of the first reference picture list and the second reference picture list, and wherein the inter predictor performs motion prediction by using the determined at least one reference picture for each of the blocks, and generates a reconstruction image.

According to another aspect according to the present invention, there is provided a computer readable recording medium having recorded thereon a program for executing the inter prediction method.

MODE OF THE INVENTION

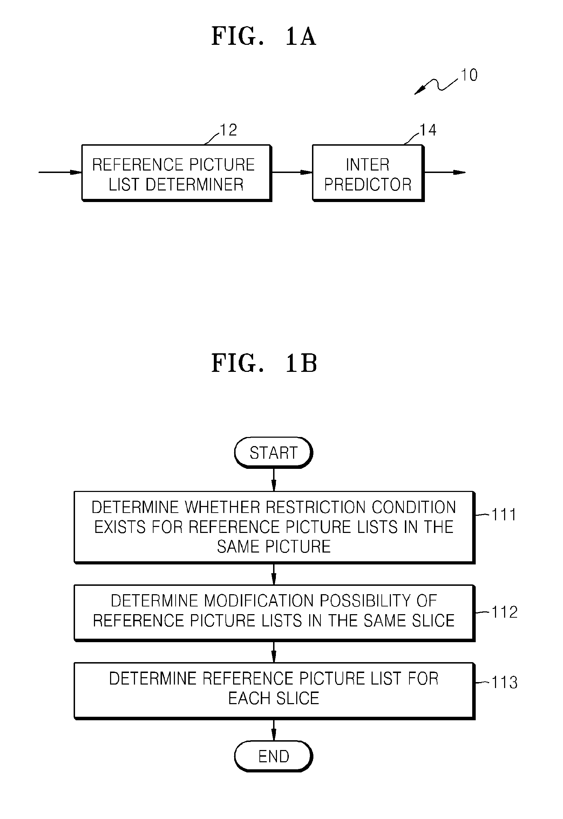

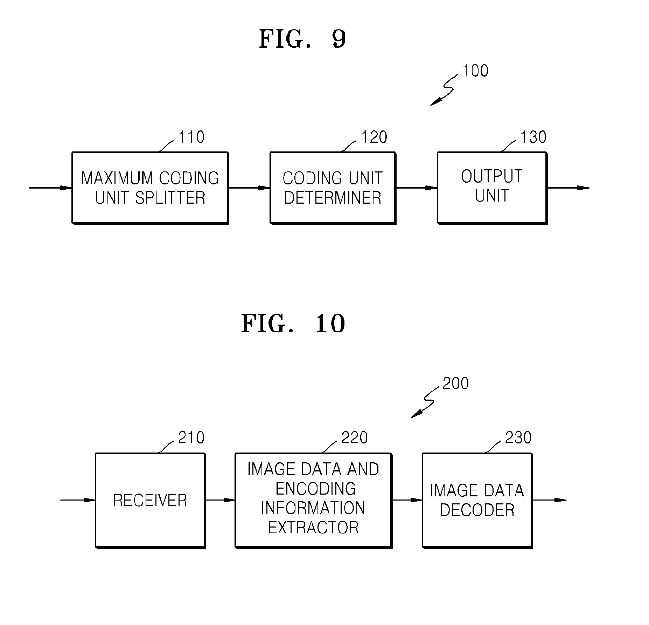

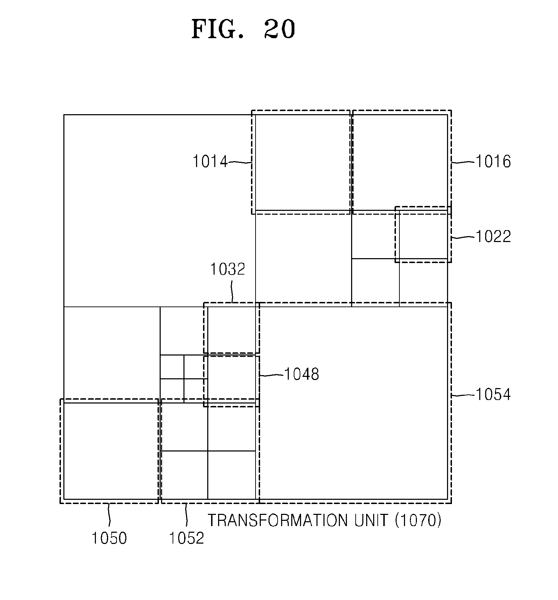

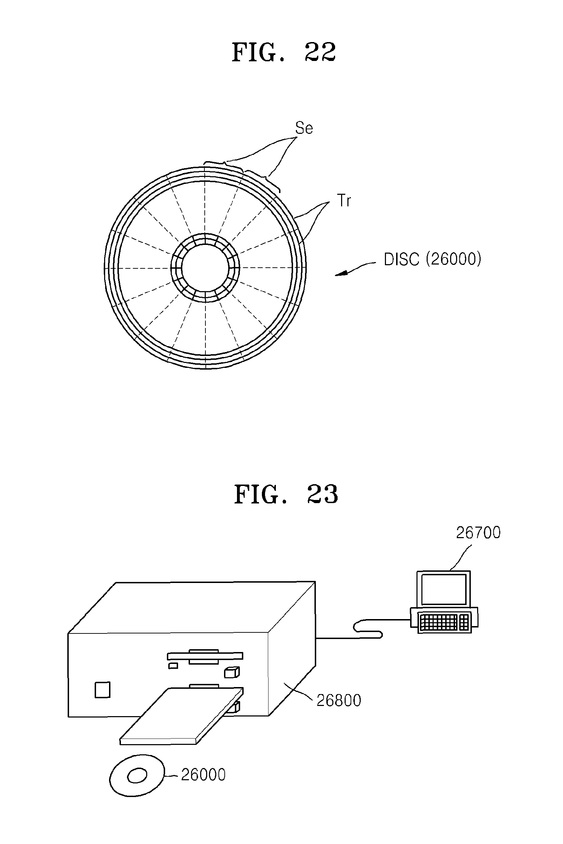

Hereinafter, an inter prediction method and apparatus capable of bi-prediction by using a bi-directional reference picture list, a motion prediction method and apparatus corresponding to the inter prediction method and apparatus, and a motion compensation method and apparatus will be described with reference to FIGS. 1A through 8B. Video encoding and decoding apparatuses and video encoding and decoding methods according to an embodiment based on coding units having a tree structure will be described with reference to FIGS. 9 through 21. In addition, various embodiments to which video encoding and decoding methods according to an embodiment are applicable will be described with reference to FIGS. 22 through 28. Hereinafter, the term 'image' may refer to a still image or a moving picture, that is, a video.

First, with reference to FIGS. 1A through 8B, an inter prediction method and apparatus capable of bi-prediction by using a bi-directional reference picture list, a motion prediction method and apparatus corresponding to the inter prediction method and apparatus, and a motion compensation method and apparatus according to embodiments will be described.

FIG. 1A is a block diagram of an inter prediction apparatus 10 according to an embodiment. FIG. 1B is a flowchart of an inter prediction method according to an embodiment.

The inter prediction apparatus 10 according to an embodiment may include a reference picture list determiner 12 and an inter predictor 14.

The inter prediction apparatus 10 according to an embodiment may include a central processor (not shown) for generally controlling the reference picture list determiner 12 and the inter predictor 14. Alternatively, the reference picture list determiner 12 and the inter predictor 14 may be controlled by respective processors (not shown) and the processors may cooperatively interact with each other so as to control an overall operation of the inter prediction apparatus 10. Alternatively, the reference picture list determiner 12 and the inter predictor 14 may be controlled according to control of an external processor (not shown) of the inter prediction apparatus 10.

The inter prediction apparatus 10 according to an embodiment may include at least one data storage unit (not shown) for storing data that is input to and output from the reference picture list determiner 12 and the inter predictor 14. The inter prediction apparatus 10 may include a memory controller (not shown) for controlling input/output of data of a data storage unit (not shown).

The inter prediction apparatus 10 according to an embodiment performs temporal prediction on video images. The inter prediction apparatus 10 determines prediction information indicating temporal distances between a current image and peripheral images, residues, etc. Thus, the prediction information, instead of entire data of images, may be used to record image information.

According to temporal prediction encoding, the current image may be predicted by temporally referring to previous and subsequent images. The current image and the reference images may be an image data units including pictures, frames, fields, slices, etc.

The inter prediction apparatus 10 according to an embodiment may split the current image into a plurality of blocks for rapid calculation of inter prediction and perform inter prediction on the blocks. That is, for performing inter prediction on a current block among the plurality of blocks split from the current image, one of the plurality of blocks split from the current image may be referred to.

Reference picture lists may be divided into L0 lists and L1 lists according to reference directions. For example, a reference picture list for forward prediction of a P slice type image may include an L0 list for list 0 prediction. A reference picture list for a B slice type image capable of bi-prediction including forward prediction, backward prediction, bi-directional prediction, etc. may include an L1 list for list 1 prediction as well as the L0 list.

The L0 list and the L1 list may each include an index indicating one or more reference images and reference order information. A basic valid number of reference images allocated to the reference picture list may be previously limited. However, the number or the reference order of the reference images may be modified for each image according to necessity. Thus, the inter prediction apparatus 10 may set information regarding the basic valid number of the reference images of the reference picture list, information regarding a modification of the number of the reference images, information regarding a modification of the reference images, information regarding a modification of the reference order, etc.

The reference picture list determiner 12 according to an embodiment may determine if at least one reference picture list among the L0 list and the L1 list is used in the current image.

The reference picture list determiner 12 according to an embodiment may determine a modification possibility of the reference images included in the reference picture list in the current image. If the modification of the reference images is possible, the reference picture list determiner 12 may determine how the reference picture list is modified.

The reference picture list may include information regarding the reference images and the reference order of the reference images. For example, the L0 list may preferentially include an index indicating reference images for forward prediction, and the L1 list may preferentially include an index indicating reference images for backward prediction. However, the L0 list and the L1 list are not necessarily limited to including reference information only for forward prediction and backward prediction, respectively.

The reference picture list determiner 12 according to an embodiment may determine the reference order of the reference images allocated to each reference picture list. For example, the reference order may be determined to preferentially refer to the reference image closer to the current image among the reference images allocated to the reference picture list according to a display order.

The reference picture list determiner 12 according to an embodiment may set attributes related to the reference picture lists, such as the basic valid number of the reference images allocated to the reference picture lists and modification of the reference picture lists.

The attributes related to the reference picture lists according to an embodiment may include a modification of the number of the reference images, a modification of the reference images allocated to the reference picture lists, or methods of modifying the reference order.

Hereinafter, a process in which the reference picture list determiner 12 according to an embodiment determines a reference picture list for inter prediction will be described with reference to FIG. 1B.

In operation 111, the reference picture list determiner 12 according to an embodiment may determine whether slices of the same slice type, among slices included in the same picture, have a restriction condition for identity of reference picture lists. For example, according to the restriction condition of the reference picture lists, reference picture lists of the slices of the same slice type need to be identical in a current picture. In operation 112, the reference picture list determiner 12 according to an embodiment may determine a modification possibility of the reference picture lists determined in the same slices. In operation 113, the reference picture list determiner 12 according to an embodiment may determine a reference picture list for a block in an inter mode, among blocks of a current slice, based on whether the restriction condition exists for the reference picture lists and the modification possibility of the reference picture lists.

In this regard, the reference picture list determiner 12 according to an embodiment may determine the modification possibility of the reference picture lists, independently from whether there is the restriction condition for the reference picture lists. That is, irrespective of whether there is the restriction condition for the reference picture lists, the modification possibility of the reference picture lists may be determined.

The reference picture list determiner 12 according to an embodiment may determine whether blocks of pictures that belong to the same sequence in the inter mode have a restriction condition that the same slice type needs to use the same reference picture list.

The reference picture list determiner 12 may also determine the modification possibility of the reference picture lists determined in the blocks of pictures that belong to the same sequence in the inter mode.

The reference picture list determiner 12 according to another embodiment may further include an LC (List Combination) list as a B slice type reference image list. The LC list may include one or more reference images among reference images of the L0 list and the L1 list. That is, the LC list may include a combination of at least one reference image of the L0 list and at least one reference image of the L1 list. Exceptionally, the LC list including at least one reference image of the L0 list or the LC list including at least one reference image of the L1 list may be generated. Thus, the LC list may include at least one of the index indicating reference images for forward prediction and the index indicating reference images for backward prediction.

The reference picture list determiner 12 may also determine a use possibility of an LC reference picture list that is a combination of the L0 list and the L1 list. If the LC reference picture list is used, the reference picture list determiner 12 may determine which images of the reference images of the L0 list and the L1 list are included in the LC reference picture list.

If the LC list is used, the inter predictor 14 may determine a current reference image from among previous images included in the L0 list and next images included in the L1 list.

The reference picture list determiner 12 according to another embodiment may determine a combination possibility of the L0 list and the L1 list that is determined for the blocks of pictures that belong to the same sequence in the inter mode, independently from the modification possibility of the reference picture lists. That is, whether to user the LC list for the blocks of pictures that belong to the same sequence in the inter mode may be determined, independently from the modification possibility of the reference picture lists.

The reference picture list determiner 12 according to another embodiment may determine whether there is a reference picture list combined by using reference pictures of the L0 list and the L1 list for each slice, if combinations of reference picture lists determined in a current slice are possible. If a reference picture list combined in the current slice is used, a modification possibility of combined reference picture lists may be determined.

The inter predictor 14 may determine a reference image for inter prediction of a B slice type current image. The inter predictor 14 according to an embodiment may determine an image that is to be referred to by the current image from among the reference images allocated to the reference picture lists determined by the reference picture list determiner 12. The inter predictor 14 may determine reference information indicating at least one reference image for prediction of an image.

The inter predictor 14 may determine the reference image from among a previous image preceding the current image and a next image following the current image according to a display order, for bi-prediction of the B slice type current image. The inter predictor 14 may determine the reference image from among images that are processed and reconstructed prior to a coding order of the current image. The inter predictor 14 may determine a current reference image from among previous images included in the L0 list. The inter predictor 14 may determine the current reference image from among next images included in the L1 list.

The inter predictor 14 according to another embodiment may determine the current reference image from among the previous images included in the L0 list and the next images included in the L1 list.

A reference picture list may be used to determine a reference block for motion prediction of an inter mode block. The reference picture list may be used to determine a reference block for motion compensation of the inter mode block.

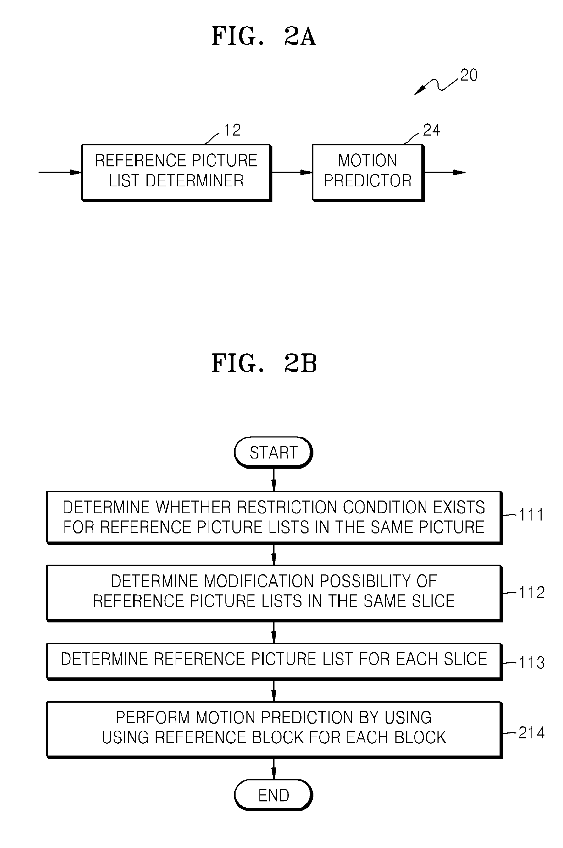

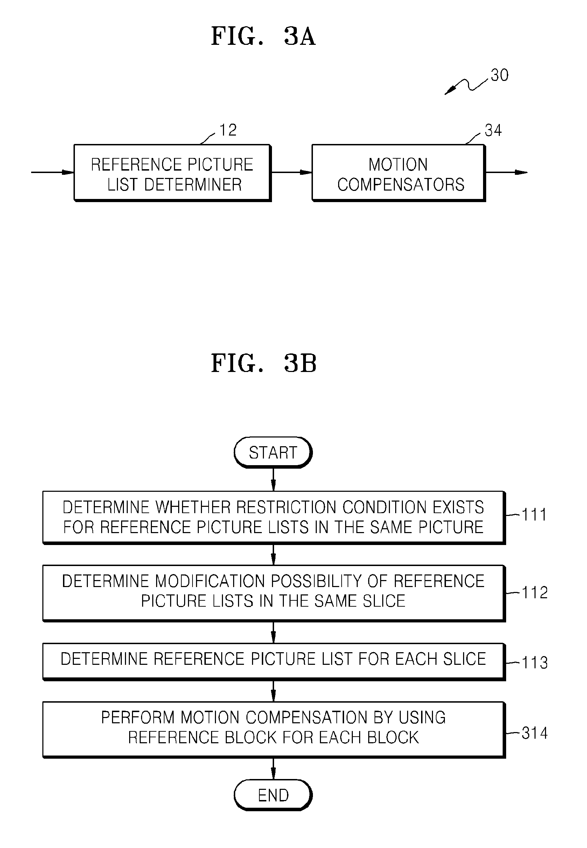

Hereinafter, a process of performing motion prediction by using a reference picture list determined by the reference picture list determiner 12 according to an embodiment will now be described in detail with reference to FIGS. 2A and 2B. A process of performing motion compensation by using the reference picture list determined by the reference picture list determiner 12 according to an embodiment will now be described in detail with reference to FIGS. 3A and 3B.

FIG. 2A is a block diagram of a motion prediction apparatus 20 corresponding to the inter prediction apparatus 10 according to an embodiment. FIG. 2B is a flowchart of a motion prediction method of performing an inter prediction method according to an embodiment.

The motion prediction apparatus 20 according to an embodiment includes the reference picture list determiner 12 and a motion predictor 24.

In operation 214, the motion predictor 24 according to an embodiment may perform motion prediction by using a reference picture for each block of a current image.

The motion predictor 24 according to an embodiment may determine a reference image for a current block from among reference images allocated to a reference picture list determined by the reference picture list determiner 12. The motion predictor 24 may determine a similarity between blocks of the determined reference image and the current block of the reference image and detect a block having a least error with the current block. The detected block may be determined as a reference block. The motion predictor 24 according to an embodiment may perform motion prediction by using the reference block determined for each block.

The motion predictor 24 may output information indicated by the determined reference image, for example, an image number, an index, etc. A motion vector indicating the reference block from among the blocks of the reference image may be determined. The motion predictor 24 may determine a residue between the reference block and the current block.

FIG. 3A is a block diagram of a motion compensation apparatus 30 corresponding to the inter prediction apparatus 10 according to an embodiment. FIG. 3B is a flowchart of a motion compensation method of performing an inter prediction method according to an embodiment.

The motion compensation apparatus 30 according to an embodiment includes the reference picture list determiner 12 and a motion compensator 34.

In operation 314, the motion compensator 34 according to an embodiment may determine a reference picture for each block of a current image and perform motion compensation.

The motion compensator 34 may determine a reference image indicated by a reference index from among images allocated to a reference picture list by the reference picture list determiner 12 and determine a reference block indicated by a motion vector from among blocks of the reference image. The motion compensator 34 may reconstruct a current block by compensating for the reference block according to a residue.

In general, during a video decoding process, motion prediction and motion compensation may be performed. During a video decoding process, motion compensation may be performed. After motion prediction is performed on an original image, to generate the same reconstruction image as the original image through motion compensation, a reference image generated through motion prediction and a residue need to be used to perform motion compensation. Thus, during the video encoding and decoding processes, to encode and decode an inter mode block, the reference information (the reference index and the motion vector) and information regarding the residue need to be transmitted and received.

Likewise, a reference picture list needs to be determined by using the same method during the video encoding and decoding processes. Thus, information regarding a method of determining the reference picture list used by the motion predictor 20 according to an embodiment may be encoded and output. The motion compensation apparatus 30 according to an embodiment may be used to receive the information regarding the method of determining the reference picture list and determine the reference picture list.

First, the video encoding process will be described.

The motion prediction apparatus 20 according to an embodiment may encode information indicating whether there is a restriction condition that the same slice type needs to use the same reference picture lists and transmit the information to inter mode blocks of the same pictures. In the case where the same slice type has the same reference picture list according to the restriction condition of the reference picture lists according to an embodiment, if there are information indicating whether to override a valid number of reference images, information regarding a valid number of reference images of an L0 list, and information regarding a valid number of reference images of an L1 list, the information may be applied to reference picture lists of the same slice type in the same way. When reference picture lists are combined and used, if the restriction condition is activated, and there are information regarding if the reference picture lists are combined and used and information regarding a valid number of reference images of an LC list, the information may be applied to an LC lists of the same slice type, i.e. the combined reference picture lists, in the same way.

The reference picture list determiner 12 according to an embodiment may determine whether there is the restriction condition of the reference picture lists for each of pictures that belong to the same sequences, and thus information indicating whether there is the restriction condition of the reference picture lists may be inserted into a sequence parameter set (SPS) of a bitstream.

The motion prediction apparatus 20 according to an embodiment may encode information indicating a modification possibility of reference picture lists for inter mode blocks that belong to the same slices. The reference picture list determiner 12 according to an embodiment may determine a modification possibility of reference picture lists for each of slices that belong to the same sequences, and thus the motion prediction apparatus 20 according to an embodiment may insert information indicating the modification possibility of reference picture lists into the SPS of the bitstream.

The reference picture list determiner 12 according to an embodiment may determine the modification possibility of reference picture lists irrespective of whether there is the restriction condition of the reference picture lists, and thus the motion prediction apparatus 20 according to an embodiment may independently insert the information indicating whether there is the restriction condition of the reference picture lists and the information indicating the modification possibility of the reference picture lists into the SPS.

The motion prediction apparatus 20 according to another embodiment may encode information indicating a combination possibility of the L0 list and the L1 list for the inter mode blocks that belong to the same slices. The reference picture list determiner 12 according to another embodiment may determine a combination possibility of the reference picture lists for each of the slices that belong to the same sequences, and thus the motion prediction apparatus 20 according to another embodiment may insert information indicating the combination possibility of the reference picture lists into the SPS of the bitstream.

The reference picture list determiner 12 according to another embodiment may determine the combination possibility of the reference picture lists irrespective of whether there is the restriction condition of the reference picture lists, and thus the motion prediction apparatus 20 according to another embodiment may independently insert the information indicating whether there is the restriction condition of the reference picture lists and the information indicating the combination possibility of the reference picture lists into the SPS.

The motion prediction apparatus 20 according to another embodiment may encode information indicating whether there is a combined reference picture list, from among the reference picture lists for inter mode blocks that belong to a current slice. The motion prediction apparatus 20 according to another embodiment may insert information indicating whether there is the combined reference picture list into a slice header of the bitstream.

The motion prediction apparatus 20 according to another embodiment may encode information indicating a modification possibility of the combined reference picture list if there are combined reference picture lists determined for the inter mode blocks that belong to the current slice. The motion prediction apparatus 20 according to another embodiment may insert the information indicating the modification possibility of the combined reference picture list into the slice header of the bitstream.

The motion prediction apparatus 20 may encode and insert a reference index indicating the determined reference picture for each block and a residue, along with the information regarding the method of determining the reference picture list into a block of the bitstream.

The motion prediction apparatus 20 may express an image by using prediction information instead of overall data of the image, and thus the motion prediction apparatus 20 may perform video compression encoding requiring a reduction of an amount of video data.

The motion prediction apparatus 20 according to an embodiment may be included in or may interact with a video encoder that encodes video based on coding units that are split from a video image according to spatial domains to perform inter prediction for video encoding. For inter prediction on a coding unit, the coding unit may be split into prediction units and partitions and then inter prediction may be performed based on the prediction units and the partitions.

A coding unit according to an embodiment may include coding units according to a tree structure according to an embodiment and a block in fixed shapes as well. According to an embodiment, the coding units according to the tree structure, prediction units thereof, and partitions thereof will be described in more detail with reference to FIGS. 9 through 21.

The motion prediction apparatus 20 according to an embodiment may perform inter prediction on an image block and image data in the coding units to output a prediction error of a reference image, i.e. a residue. The motion prediction apparatus 20 may generate the residue as a quantized transformation coefficient through transformation and quantization, perform entropy encoding on symbols such as a transformation coefficient, reference information, coding information, etc., and output a bitstream. The motion prediction apparatus 20 according to an embodiment may encode and output symbols including L0 list related information and L1 list related information that include information regarding a reference order of images that belong to each reference picture list or the number of the images, and reference picture list related information such as information regarding a modification of reference picture lists.

The motion prediction apparatus 20 may generate a reconstruction image by performing inverse quantization, inverse transformation, and prediction compensation on the transformation coefficient, reconstructing an image within a spatial domain, and performing in-loop filtering on the image. The reconstruction image may be used as a reference image for prediction of a next image. That is, the motion prediction apparatus 20 according to an embodiment may refer to the reconstructed image generated by the video encoder by using at least one of the L0 list and the L1 list, for bi-prediction of a B slice type current image. In doing so, the motion prediction apparatus 20 may determine the reference image and the residue through inter prediction.

Therefore, video compression encoding may be implemented through motion prediction performed by the motion prediction apparatus 20.

The motion prediction apparatus 20 according to an embodiment may cooperatively interact with an internal video encoding processor installed therein or an external video encoding processor in order to output a video encoding result, and thus, a video encoding operation including motion prediction may be performed. The internal video encoding processor of the motion prediction apparatus 20 according to an embodiment may be embodied by adding a video encoding processing module to a central operating device or a graphic operating device as well as to a separate processor, which performs a basic video encoding operation.

Next, a video decoding process will now be described.

The motion compensation apparatus 30 according to an embodiment receive, for inter mode blocks of the same picture, information indicating whether there is a restriction condition that the same slice types need to use the same reference picture lists. The motion compensation apparatus 30 according to an embodiment may also parse the information regarding the restriction condition of reference picture lists from a SPS of a received bitstream. Based on the information regarding the restriction condition of reference picture lists extracted from the SPS, it may be determined whether there is the restriction condition of reference picture lists for each of pictures that belong to a current sequence.

The motion compensation apparatus 30 according to an embodiment may receive information indicating a modification possibility of reference picture lists for inter mode blocks that belong to the same slice. The motion compensation apparatus 30 according to an embodiment may parse the information indicating a modification possibility of reference picture lists from the SPS of the received bitstream. Based on the information indicating the modification possibility of reference picture lists extracted from the SPS, the modification possibility of reference picture lists for each of slices that belong to the current sequence may be determined.

The motion compensation apparatus 30 according to an embodiment may independently parse the information indicating whether there is the restriction condition of reference picture lists and the information indicating the modification possibility of reference picture lists from the SPS. Thus, the motion compensation apparatus 30 may determine the modification possibility of reference picture lists irrespective of whether there is the restriction condition of reference picture lists.

The motion compensation apparatus 30 according to another embodiment may receive information indicating a combination possibility of the L0 list and the L1 list for inter mode blocks that belong to a current picture. The motion compensation apparatus 30 according to another embodiment may parse information indicating a combination possibility of reference picture lists from the SPS. Thus, the combination possibility of reference picture lists for each of the slices that belong to the same sequences may be determined.

The motion compensation apparatus 30 according to another embodiment may independently parse the information indicating whether there is the restriction condition of reference picture lists and the information indicating the combination possibility of reference picture lists from the SPS. Thus, the motion compensation apparatus 30 according to another embodiment may determine the combination possibility of reference picture lists irrespective of whether there is the restriction condition of reference picture lists.

The motion compensation apparatus 30 according to another embodiment may receive information indicating whether there is a combined reference picture list from among the reference picture lists for the inter mode blocks that belong to the current slice. The motion compensation apparatus 30 according to another embodiment may parse the information indicating whether there is the combined reference picture list from a slice header of the bitstream.

The motion compensation apparatus 30 according to another embodiment may receive information indicating a modification possibility of the combined reference picture list if there are combined reference picture lists determined for the inter mode blocks that belong to the current slice. The motion compensation apparatus 30 according to another embodiment may parse the information indicating the modification possibility of the combined reference picture list from the slice header of the bitstream.

The motion compensation apparatus 30 may parse a reference index indicating a reference picture for a current block and a residue from a block of the bitstream, along with information regarding a method of determining a reference picture list.

The motion compensation apparatus 30 according to an embodiment may be included in or may interact with a video decoder that decodes video based on coding units that are split from a video image according to spatial domains to perform motion compensation for video decoding. A coding unit for motion compensation may include prediction units and partitions, and motion compensation may be performed based on the prediction units and partitions. A coding unit according to an embodiment may include coding units according to a tree structure according to an embodiment and a block in fixed shapes as well, as described above.

The motion compensation apparatus 30 may perform entropy decoding on the received bitstream to parse symbols such as a transformation coefficient, reference information, coding information, etc. The motion compensation apparatus 30 according to an embodiment may also parse symbols including reference picture list related information.

The motion compensation apparatus 30 according to an embodiment may perform inverse quantization and inverse transformation on the parsed transformation coefficient for each transformation unit to reconstruct a residue of the spatial domain. The motion compensation apparatus 30 according to an embodiment may determine a reference image by referring to a previously reconstructed image that is recorded on at least one of the L0 list and the L1 list, for bi-prediction of a B slice type current partition, and determine a reference block of the reference image indicated by a motion vector.

The motion compensation apparatus 30 according to an embodiment may perform deblocking filtering and sample adaptive offset (SAO) filtering on an image of the spatial domain, thereby generating a reconstruction image. The reconstruction image may be used as a reference image for prediction of a next image.

Therefore, video compression decoding may be implemented through motion compensation performed by the motion compensation apparatus 30.

The motion compensation apparatus 30 according to an embodiment may cooperatively interact with an internal video decoding processor installed therein or an external video decoding processor in order to output a video decoding result, and thus, a video decoding operation including motion compensation may be performed. The internal video decoding processor of the motion compensation apparatus 30 according to an embodiment may be embodied by adding a video decoding processing module to a central operating device or a graphic operating device as well as to a separate processor, which performs a basic video decoding operation.

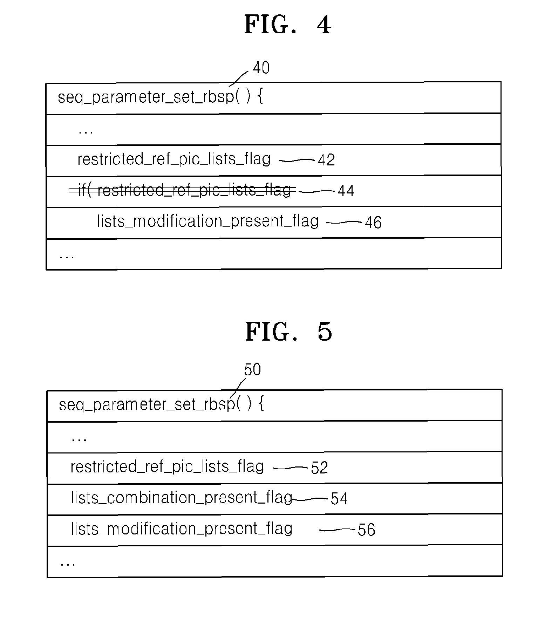

A syntax of reference picture list related information that is transmitted by the motion prediction apparatus 20 and is parsed by the motion compensation apparatus 30 according to an embodiment will now be described in detail with reference to FIGS. 4 through 8 below.

FIG. 4 is a diagram of a syntax of a SPS 40 according to an embodiment.

A 'seq_parameter_set_rbsp()' 40 indicates the SPS. A 'restricted_ref_pic_lists_flag' 42 indicates information regarding whether there is a restriction condition of a reference picture list. A 'lists_modification_present_flag' 46 indicates information regarding a modification possibility of the reference picture list.

The motion prediction apparatus 20 may record various types of information necessary for decoding a current sequence in the 'seq_parameter_set_rbsp()' 40 to encode parameters related to the sequence. The motion compensation apparatus 30 may parse the parameters related to the sequence from the 'seq_parameter_set_rbsp()' 40 to read the various types of information necessary for decoding the current sequence.

The reference picture list determiner 12 according to an embodiment may determine an attribute of a reference picture list determined in each of sequences.

The motion prediction apparatus 20 according to an embodiment may record the 'restricted_ref_pic_lists_flag' 42 indicating whether the same reference picture lists need to be determined for slices of the same slice type that belong to the current sequence in the 'seq_parameter_set_rbsp()' 40 including various types of information regarding the current sequence.

The motion prediction apparatus 20 according to an embodiment may also record a 'lists_modification_present_flag' 46 indicating whether a list modification needs to be considered with respect to reference picture lists determined in the current sequence, i.e., indicating the modification possibility of the reference picture list, in the 'seq_parameter_set_rbsp()' 40. In particular, without having to consider a value of the 'restricted_ref_pic_lists_flag' 42 44, the 'lists_modification_present_flag' 46 indicating the modification possibility of the reference picture list may be defined.

The motion compensation apparatus 30 according to an embodiment may parse the various types of information regarding the current sequence from the 'seq_parameter_set_rbsp()' 40. The motion compensation apparatus 30 according to an embodiment may parse the 'restricted_ref pic_lists_flag' 42 from the 'seq_parameter_set_rbsp()' 40 to read whether the same reference picture lists need to be determined for pictures of the same slice type that belong to the current sequence.

The motion compensation apparatus 30 according to an embodiment may parse the 'lists_modification_present_flag' 46 from the 'seq_parameter_set_rbsp()' 40 to check whether the list modification needs to be considered with respect to the reference picture lists determined in the current sequence, i.e., the modification possibility of the reference picture list. In particular, without having to consider a reading result of the 'restricted_ref_pic_lists_flag' 42, the 'lists_modification_present_flag' 46 indicating the modification possibility of the reference picture list may be parsed.

Therefore, irrespective of whether there is a restriction condition that the reference picture lists determined in the slices of the same slice type need to be the same, the modification possibility of the reference picture list may be determined.

FIG. 5 is a diagram of a syntax of a SPS 50 according to another embodiment.

The motion prediction apparatus 20 according to another embodiment may record a 'lists_combination_present_flag' 54 indicating a combination possibility of reference picture lists and a 'restricted_ref_pic_lists_flag' 52 indicating whether there is a restriction condition of reference picture lists determined in a current sequence and a 'lists_modification_present_flag' 56 indicating a modification possibility of reference picture lists as well in a 'seq_parameter_set_rbsp()' 50.

That is, the motion prediction apparatus 20 according to another embodiment may record the 'lists_combination_present_flag' 54 in the 'seq_parameter_set_rbsp()' 50 with respect to the reference picture lists determined in the current sequence so as to indicate whether to use an LC list configured by combining reference images that belong to an L0 list and an L1 list.

The 'lists_combination_present_flag' 54 may also be defined without having to consider a value of the 'restricted_ref_pic_lists_flag' 52.

The motion compensation apparatus 30 according to an embodiment may parse the 'lists_combination_present_flag' 54 and the 'restricted_ref_pic_lists_flag' 52 and the 'lists_modification_present_flag' 56 as well from the 'seq_parameter_set_rbsp()' 50 to check whether a list combination of the reference picture lists determined in the current sequence needs to be considered, i.e., the combination possibility of reference picture lists.

In particular, without having to consider a reading result of the 'restricted_ref_pic_lists_flag' 52, the 'lists_combination_present_flag' 54 indicating the combination possibility of reference picture lists may be parsed.

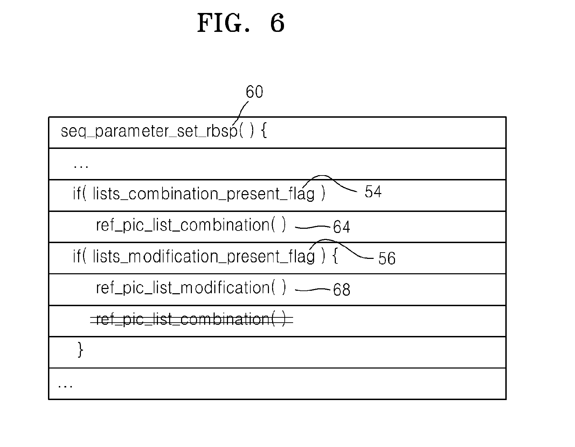

FIG. 6 is a diagram of a syntax of a SPS 60 according to another embodiment.

A 'slice_header()' 60 indicates a slice header. A 'ref_pic_list_combination()' 64 indicates a parameter set related to a combination of reference picture lists. A 'ref_pic_list_modification()' 68 indicates a parameter set related to a modification of reference picture lists.

The motion prediction apparatus 20 may record various types of information necessary for decoding a current slice the 'slice_header()' 60 to encode parameters related to the slice. The motion compensation apparatus 30 may parse the parameters related to the slice from the 'slice_header()' 60 to read the various types of information necessary for decoding the current slice.

The reference picture list determiner 12 according to another embodiment may determine a reference picture list according to a slice type for each slice.

The motion prediction apparatus 20 according to another embodiment may record the 'ref_pic list_combination()' 64 including information regarding how to combine reference picture lists in the current slice in the 'slice_header()' 60 including various types of information regarding the current slice. In particular, only in the case where the 'lists_combination_present_flag' 54 included in the SPS 'seq_parameter_set_rbsp()' 50 regarding a sequence including the current slice indicates a combination of reference picture lists, may the 'ref_pic list_combination()' 64 including information regarding a specific method of combining the reference picture lists be recorded in the'slice_header()' 60.

The motion prediction apparatus 20 according to an embodiment may also record the 'ref_pic list_modification()' 68 including information regarding a specific method of modifying the reference picture lists in the 'slice_header()' 60 only in the case where the 'lists_modification_present_flag' 56 included in the SPS 'seq_parameter_set_rbsp()' 50 indicates that a list modification of the reference picture lists determined in a current sequence is possible.

In particular, independently from a modification possibility of reference picture lists indicated by the 'lists_modification_present_flag' 56 included in the SPS 'seq_parameter_set_rbsp()' 50, the 'ref_pic list_combination()' 64 indicating the information regarding the specific method of combining the reference picture lists may be included in the 'slice_header()' 60.

The motion compensation apparatus 30 according to another embodiment may parse the 'ref_pic list_combination()' 64 included in the 'slice_header()' 60 to read the information regarding how to combine the reference picture lists in the current slice. In particular, only in the case where the parsed 'lists_combination_present_flag' 54 included in the SPS 'seq_parameter_set_rbsp()' 50 regarding the sequence including the current slice indicates that the reference picture lists can be combined, may the 'ref_pic_list_combination()' 64 indicating the information regarding the specific method of combining the reference picture lists be parsed from the 'slice_header()' 60.

The motion compensation apparatus 30 according to an embodiment may also parse the 'ref_pic list_modification()' 68 including the information regarding the specific method of modifying the reference picture lists from the 'slice_header()' 60 only in the case where the 'lists_modification_present_flag' 56 included in the SPS 'seq_parameter_set_rbsp()' 50 indicates that the list modification of the reference picture lists determined in the current sequence is possible.

In particular, independently from a modification possibility of reference picture lists determined according to the 'lists_modification_present_flag' 56, the motion compensation apparatus 30 according to an embodiment may parse the 'ref_pic_list_combination()' 64 indicating the information regarding the specific method of combining the reference picture lists from the 'slice_header()' 60.

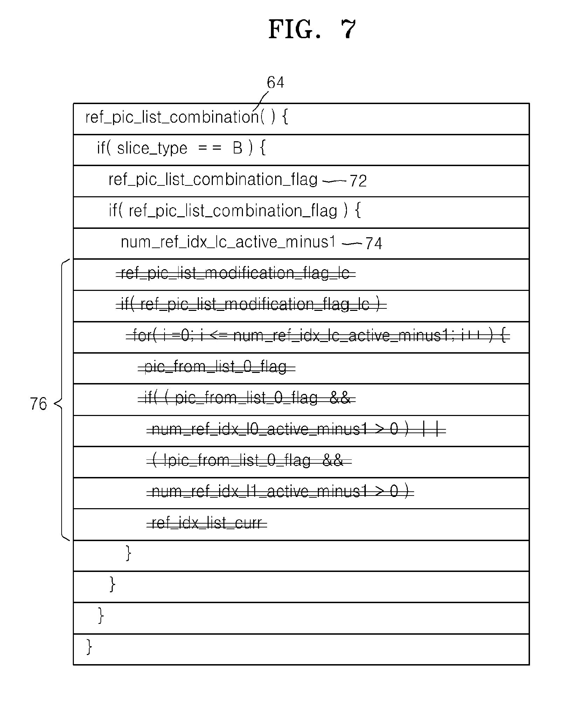

FIG. 7 is a diagram of a syntax of a parameter set related to a combination of reference picture lists according to another embodiment.

The motion prediction apparatus 20 according to another embodiment may record information regarding a specific method of combining reference picture lists in the 'ref_pic list_combination()' 64 that is the parameter set related to the combination of reference picture lists.

The motion prediction apparatus 20 according to another embodiment may record a 'ref_pic_list_combination_flag' 72 indicating whether reference picture lists are combined and used for inter prediction of a current list in a B slice type in the 're_pic_list_combination()' 64. If the reference picture lists are combined and used, a 'num_ref_idx_lc_active_minus1' 74 indicating a number of valid reference images that belong to a combined reference picture list may be recorded in the 'ref_pic_list_combination()' 64.

When an L0 list and an L1 list are not the same with respect to the slice of the B slice type, it is necessary to determine the number of the valid reference images that belong to the combined reference picture list in order to prevent the combined reference picture list from being parsed. Thus, if the reference picture lists are combined and used in the 'ref_pic_list_combination()' 64, the 'num_ref_idx_lc_active_minus1' 74 may be further transmitted necessarily.

However, the motion prediction apparatus 20 according to another embodiment may not record information 76 related to a method of modifying combined reference picture lists in the 'ref_pic_list_combination()' 64 for recording the information regarding the method of combining reference picture lists.

The motion compensation apparatus 30 according to another embodiment may read the information regarding the specific method of combining reference picture lists from the 'ref_pic list_combination()' 64 that is the parameter set related to the combination of reference picture lists.

The motion compensation apparatus 30 according to another embodiment may also parse the 'ref_pic_list_combination_flag' 72 from the 'ref_pic_list_combination()' 64 to read whether the reference picture lists are combined and used for inter prediction of the current list in the B slice type. If the motion compensation apparatus 30 reads that the reference picture lists are combined and used for the current list, the motion compensation apparatus 30 may further parse the 'num_ref_idx_lc_active_minus1' 74 from the 'ref_pic_list_combination()' 64 to read the number of the valid reference images that belong to the combined reference picture list.

When the L0 list and the L1 list are not the same with respect to the slice of the B slice type, during a parsing process, the number of the valid reference images that belong to the combined reference picture list may be read from the 'num_ref_idx_lc_active_minus1' 74, and an unnecessarily combined reference picture list may be prevented from being parsed.

However, the motion compensation apparatus 30 according to another embodiment may read only the information regarding the method of combining reference picture lists from the 'ref_pic_list_combination()' 64 and may not necessarily read the information 76 related to the method of modifying the combined reference picture lists.

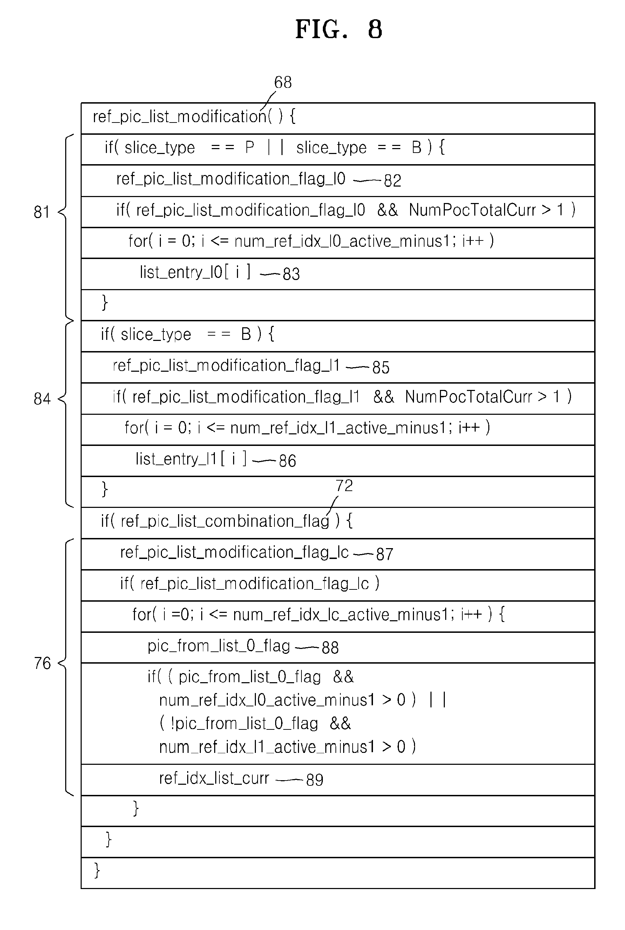

FIG. 8 is a diagram of a syntax of a parameter set related to a modification of reference picture lists according to another embodiment.

The motion prediction apparatus 20 according to another embodiment may record information regarding a specific method of modifying reference picture lists in the 'ref_pic list_modification()' 68 that is the parameter set related to the modification of reference picture lists. In particular, information regarding a method of modifying reference picture lists may be individually recorded in the 'ref_pic list_modification()' 68 for each direction of a reference picture.

The motion prediction apparatus 20 according to another embodiment may record at least one of information 81 regarding a method of modifying an L0 list when a current slice is a P or B slice type, information 84 regarding a method of modifying an L1 list when the current slice is the B slice type, and information 76 regarding a method of modifying a combined reference picture list in the 'ref_pic_list_modification()' 68.

The information 81 regarding the method of modifying the L0 list may include a 'ref_pic_list_modification_flag_l0' 82 indicating whether the L0 list has been modified and a 'list_entry_l0' 83 indicating an index of reference images included in the L0 list. Likewise, the information 84 regarding the method of modifying the L1 list may include a 'ref_pic_list_modification_flag_l1' 85 indicating whether the L1 list has been modified and a 'list_entry_l1' 86 indicating an index of reference images included in the L1 list.

If the 'ref_pic_list_combination_flag' 72 previously inserted into a slice header 60 indicates that reference picture lists are combined and used in a current slice, the motion prediction apparatus 20 according to another embodiment may also record the information 76 related to the method of modifying the combined reference picture lists in the 'ref_pic_list_modification()' 68 that is the parameter set related to the modification of reference picture lists.

The motion prediction apparatus 20 according to another embodiment may record a 'ref_pic_list_modification_flag_lc' 87 indicating whether the combined reference picture list has been modified, a 'pic_from_list_0_flag' 88 indicating whether the reference images of the L0 list are combined, and a 'ref_idx_list_curr' 89 indicating an index of a currently added reference image, as the information 76 related to the method of modifying the combined reference picture lists.

The motion compensation apparatus 30 according to another embodiment may read the information regarding a specific method of modifying reference picture lists from the 'ref_pic list_modification()' 68 that is the parameter set related to the modification of reference picture lists. In particular, the information regarding the method of modifying reference picture lists individually defined for each direction of the reference picture may be parsed from the 'ref_pic list_modification()' 68.

The motion compensation apparatus 30 according to another embodiment may read at least one of the information 81 regarding the method of modifying the L0 list when the current slice is the P or B slice type, the information 84 regarding the method of modifying the L1 list when the current slice is the B slice type, and the information 76 regarding the method of modifying the combined reference picture list from the 'ref_pic_list_modification()' 68.

The motion compensation apparatus 30 according to another embodiment may parse the 'ref_pic_list_modification_flag_l0' 82 as the information 81 regarding the method of modifying the L0 list to read whether the L0 list has been modified. The motion compensation apparatus 30 according to another embodiment may also parse the 'list_entry_l0' 83 as the information 81 regarding the method of modifying the L0 list to read the index of the reference images included in the L0 list.

Likewise, whether the L1 list has been modified may be read from the parsed 'ref_pic_list_nnodification_flag_l1' 85 as the information 84 regarding the method of modifying the L1 list. The index of the reference images included in the L0 list may be read from the parsed 'list_entry_l1' 86 as the information 84 regarding the method of modifying the L1 list.

If the motion compensation apparatus 30 according to another embodiment reads that the reference picture lists are combined and used in the current slice from the 'ref_pic_list_combination_flag' 72 previously parsed in the slice header 60, the motion compensation apparatus 30 according to another embodiment may further read the information 76 regarding the method of modifying the combined reference picture list from the 'ref_pic list_modification()' 68 that is the parameter set related to the modification of reference picture lists.

The motion prediction apparatus 20 according to another embodiment may parse the 'ref_pic_list_modification_flag_lc' 87 from the information 76 regarding the method of modifying the combined reference picture list to read whether the combined reference picture list has been modified. The 'pic_from_list_0_flag' 88 may be parsed from the information 76 regarding the method of modifying the combined reference picture list to read whether the reference images of the L0 list have been combined. The 'ref_idx_list_curr' 89 may be parsed from the information 76 regarding the method of modifying the combined reference picture list to read an index of the index of the currently added reference image.

Therefore, at least one of the inter prediction apparatus 10, the motion prediction apparatus 20, and the motion compensation apparatus 30 according to an embodiment may determine a modification possibility of reference picture lists, independently from whether there is a restriction condition of limiting reference picture lists for each slice type. When it is possible to combine reference picture lists according to another embodiment, information regarding a combination of reference picture lists and information regarding a modification of reference picture lists may be independently transmitted and received. Thus, a process of transmitting unnecessary information regarding reference picture lists is omitted, thereby reducing a transmission bit rate. Likewise, a process of parsing unnecessary information regarding reference picture lists is omitted, thereby reducing a process of parsing data.

As described above, in the inter prediction apparatus 10, the motion prediction apparatus 20, and the motion compensation apparatus 30 according to the above-described various embodiments described with reference to FIGS. 1A through 8 above, motion prediction and motion compensation are performed for each partition determined according to coding units having a tree structure. Hereinafter, with reference to FIGS. 9 through 21, a video encoding method and a video decoding method based on a coding unit according to a tree structure will be described.

FIG. 9 is a block diagram of a video encoding apparatus 100 based on a coding unit according to a tree structure, according to an embodiment of the present invention.

The video encoding apparatus 100 including video prediction based on a coding unit according to a tree structure according to an embodiment includes a coding determiner 120 and an output unit 130. Hereinafter, for convenience of description, the video encoding apparatus 100 accompanied by video prediction based on a coding unit according to a tree structure according to an embodiment is referred to as 'the video encoding apparatus 100'.

The coding determiner 120 may split a current picture based on a maximum coding unit for the current picture of an image. If the current picture is larger than the maximum coding unit, image data of the current picture may be split into the at least one maximum coding unit. The maximum coding unit according to an embodiment of the present invention may be a data unit having a size of 32x32, 64x64, 128x128, 256x256, etc., wherein a shape of the data unit is a square having a width and length in squares of 2.

A coding unit according to an embodiment of the present invention may be characterized by a maximum size and a depth. The depth denotes a number of times the coding unit is spatially split from the maximum coding unit, and as the depth deepens, deeper encoding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment of the present invention is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split may be predetermined.

The coding unit determiner 120 encodes at least one split region obtained by splitting a region of the maximum coding unit according to depths, and determines a depth to output finally encoded image data according to the at least one split region. In other words, the coding unit determiner 120 determines a coded depth by encoding the image data in the deeper coding units according to depths, according to the maximum coding unit of the current picture, and selecting a depth having the least encoding error. Thus, the encoded image data of the coding unit corresponding to the determined coded depth is finally output. Also, the coding units corresponding to the coded depth may be regarded as encoded coding units. The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth to a lower depth by measuring an encoding error of the image data of the each coding unit, separately. Accordingly, even when image data is included in one maximum coding unit, the image data is split into regions according to the depths and the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 according to an embodiment may determine coding units having a tree structure included in the maximum coding unit. The 'coding units having a tree structure' according to an embodiment of the present invention include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment of the present invention is an index related to the number of times splitting is performed from a maximum coding unit to a minimum coding unit. A first maximum depth according to an embodiment of the present invention may denote the total number of times splitting is performed from the maximum coding unit to the minimum coding unit. A second maximum depth according to an embodiment of the present invention may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3 and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit. Transformation may be performed according to a method of orthogonal transformation or integer transformation.

Since the number of deeper coding units increases whenever the maximum coding unit is split according to depths, encoding including the prediction encoding and the transformation is performed on all of the deeper coding units generated as the depth deepens. For convenience of description, the prediction encoding and the transformation will now be described based on a coding unit of a current depth, in a maximum coding unit.

The video encoding apparatus 100 according to an embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding on the maximum coding unit, the prediction encoding may be performed based on a coding unit corresponding to a coded depth according to an embodiment, i.e., based on a coding unit that is no longer split into coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one of a height and a width of the prediction unit. The partition is a data unit obtained by dividing the prediction unit of the coding unit and the prediction unit may be a partition having the same size as the coding unit.

For example, when a coding unit of 2Nx2N (where N is a positive integer) is no longer split and becomes a prediction unit of 2Nx2N, a size of a partition may be 2Nx2N, 2NxN, Nx2N, or NxN. Examples of a partition type according to an embodiment include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 according to an embodiment may also perform the transformation on the image data in a coding unit based not only on the coding unit for encoding the image data, but also based on a transformation unit that is different from the coding unit. In order to perform the transformation in the coding unit, the transformation may be performed based on a data unit having a size smaller than or equal to the coding unit. For example, the transformation unit for the transformation may include a transformation unit for an intra mode and a data unit for an inter mode.

Similarly to the coding unit according to the tree structure according to an embodiment, the transformation unit in the coding unit may be recursively split into smaller sized regions and residual data in the coding unit may be divided according to the transformation having the tree structure according to transformation depths.

According to an embodiment of the present invention, a transformation depth indicating the number of times splitting is performed to obtain the transformation unit by splitting the height and width of the coding unit may also be set in the transformation unit. For example, when the size of a transformation unit of a current coding unit is 2Nx2N, a transformation depth may be set to 0. When the size of a transformation unit is NxN, the transformation depth may be set to 1. In addition, when the size of the transformation unit is N/2xN/2, the transformation depth may be set to 2. That is, the transformation unit according to the tree structure may also be set according to the transformation depth.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

Coding units and a prediction unit/partition according to a tree structure in a maximum coding unit, and a method of determining a transformation unit, according to embodiments according to the present invention, will be described in detail later with reference to FIGS. 10 through 20.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to the coded depth may include information about the coded depth, the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 130 according to an embodiment may assign encoding information about a corresponding coded depth and an encoding mode to at least one of the coding unit, the prediction unit, and a minimum unit included in the maximum coding unit.

The minimum unit according to an embodiment of the present invention is a rectangular data unit obtained by splitting the minimum coding unit constituting the lowermost depth by 4. Alternatively, the minimum unit may be a maximum rectangular data unit having a maximum size, which is included in all of the coding units, prediction units, partition units, and transformation units included in the maximum coding unit.

For example, the encoding information output through the output unit 130 may be classified into encoding information according to coding units, and encoding information according to prediction units. The encoding information according to the coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Also, information about a maximum size of the coding unit defined according to pictures, slices, or GOPs, and information about a maximum depth may be inserted into a header of a bitstream, a sequence parameter set (SPS) or a picture parameter set (PPS).

In addition, information about a maximum size of a transformation unit and information about a minimum size of a transformation, which are acceptable for a current video may also be output via a header of a bitstream, a SPS or a PPS. The output unit 130 may encode and output reference information, prediction information, and information about a slice type, which are related to prediction.

In the video encoding apparatus 100, the deeper coding unit may be a coding unit obtained by dividing a height or width of a coding unit of an upper depth, which is one layer higher than the current depth, by two. In other words, when the size of the coding unit of the current depth is 2Nx2N, the size of the coding unit of the lower depth is NxN. Also, the coding unit of the current depth having the size of 2Nx2N may include a maximum value 4 of the coding unit of the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having high resolution or large data amount is encoded in a conventional macroblock, a number of macroblocks per picture excessively increases. Accordingly, a number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

The video encoding apparatus 100 may determine a reference picture list and perform inter prediction according to the motion prediction method described with reference to FIGS. 2A and 2B above.

The coding unit determiner 120 may determine a prediction unit for inter prediction for each respective coding unit according to a tree structure for each maximum coding unit and may perform inter prediction for each respective prediction unit and one or more partitions thereof.

The coding unit determiner 120 according to an embodiment may determine whether there is a restriction condition for identity of reference picture lists of slices of the same slice type among slices included in the same picture for each of pictures that belong to a current sequence. Independently from the restriction condition of reference picture lists, the coding unit determiner 120 may determine a modification possibility of reference picture lists determined in the current sequence. The coding unit determiner 120 may determine a reference picture list for blocks in an inter mode that belongs to a picture based on whether there is the restriction condition of reference picture lists and the modification possibility of reference picture lists that are previously determined.

The coding unit determiner 120 according to another embodiment may determine a combination possibility of an L0 list and an L1 list that are determined for blocks that belong to the same picture, independently from the modification possibility of reference picture lists that belong to the current sequence.

If it is possible to combine the reference picture lists determined in the current slice for each of slices that belong to the same picture, the coding unit determiner 120 according to another embodiment may determine whether there are reference picture lists combined by using reference pictures of the L0 list and the L1 list. If there are combined reference picture lists determined in the current slice for each of slices that belong to the same picture, a modification possibility of the combined reference picture lists may be determined.

The output unit 130 according to an embodiment may encode information indicating whether there is the restriction condition of reference picture lists in the current sequence to insert the information into a SPS of a bitstream. Irrespective of whether there is the restriction condition of the reference picture list, the output unit 130 may encode information indicating the modification possibility of reference picture lists determined in the current sequence to insert the information into the SPS.

The output unit 130 according to another embodiment may encode information indicating the combination possibility of the L0 list and the L1 list in the current sequence to insert the information into the SPS. The output unit 130 according to another embodiment may encode information indicating whether there is a combined reference picture list in the current slice to insert the information into a slice header of the bitstream. The output unit 130 according to another embodiment may encode information indicating a modification possibility of combined reference picture lists in the current slice to insert the information into the slice header.

FIG. 10 is a block diagram of a video decoding apparatus 200 based on a coding unit according to a tree structure, according to an embodiment of the present invention.

The video decoding apparatus 200 accompanied by video prediction based on the coding unit according to the tree structure according to an embodiment includes a receiver 210, an image data and encoding information extractor 220, and an image data decoder 230. Hereinafter, for convenience of description, the video decoding apparatus 200 accompanied by video prediction based on a coding unit according to a tree structure will be referred to as the 'video decoding apparatus 200'.

Definitions of various terms, such as a coding unit, a depth, a prediction unit, a transformation unit, and information about various encoding modes, for decoding operations of the video decoding apparatus 200 are identical to those described with reference to FIG. 9 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a SPS, or a PPS.

Also, the image data and encoding information extractor 220 extracts information about a coded depth and an encoding mode for the coding units having a tree structure according to each maximum coding unit, from the parsed bitstream. The extracted information about the coded depth and the encoding mode is output to the image data decoder 230. In other words, the image data in a bitstream is split into the maximum coding unit so that the image data decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each maximum coding unit. Accordingly, the video decoding apparatus 200 may restore an image by decoding the image data according to a coded depth and an encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. The predetermined data units to which the same information about the coded depth and the encoding mode is assigned may be inferred to be the data units included in the same maximum coding unit.

The image data decoder 230 restores the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include prediction including intra prediction and motion compensation, and inverse transformation. Inverse transformation may be performed according to a method of inverse orthogonal transformation or inverse integer transformation.

The image data decoder 230 may perform intra prediction or motion compensation according to a partition and a prediction mode of each coding unit, based on the information about the partition type and the prediction mode of the prediction unit of the coding unit according to coded depths.

In addition, the image data decoder 230 may read transformation unit information according to a tree structure for each coding unit for inverse transformation for each maximum coding unit and perform inverse transformation based on transformation units for each coding unit. Via the inverse transformation, a pixel value of a spatial region of the coding unit may be restored.

The image data decoder 230 may determine at least one coded depth of a current maximum coding unit by using split information according to depths. If the split information indicates that image data is no longer split in the current depth, the current depth is a coded depth. Accordingly, the image data decoder 230 may decode encoded data of at least one coding unit corresponding to each coded depth in the current maximum coding unit by using the information about the partition type of the prediction unit, the prediction mode, and the size of the transformation unit for each coding unit corresponding to the coded depth, and output the image data of the current maximum coding unit.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. For each coding unit determined as described above, information about an encoding mode may be obtained so as to decode the current coding unit.

The video decoding apparatus 200 may determine a reference picture list according to the motion compensation method described with reference to FIGS. 3A and 3B to perform motion compensation.

The image data decoder 230 may determine a prediction unit for motion prediction for each respective coding unit according to a tree structure for each maximum coding unit and may perform motion prediction for each respective prediction unit and one or more partitions thereof.

The image data and encoding information extractor 220 according to another embodiment may parse information indicating whether there is a restriction condition of reference picture lists in a current sequence from a SPS of a bitstream. Irrespective of whether there is the restriction condition of reference picture lists, the image data and encoding information extractor 220 may parse information indicating a modification possibility of reference picture lists in the current sequence from the SPS.

The image data and encoding information extractor 220 according to another embodiment may parse information indicating a combination possibility of an L0 list and an L1 list in the current sequence from the SPS. The image data and encoding information extractor 220 according to another embodiment may parse information indicating whether there is a combined reference picture list in the current slice from a slice header of the bitstream. The image data and encoding information extractor 220 according to another embodiment may parse information indicating a modification possibility of combined reference picture lists in the current slice from the slice header.

The image data decoder 230 according to an embodiment may determine whether there is a restriction condition for identity of reference picture lists of slices of the same slice type from among slices included in the same picture, for each of pictures that belong to the current sequence. Independently from the restriction condition of reference picture lists, the image data decoder 230 may determine the modification possibility of reference picture lists determined in the current sequence. The image data decoder 230 may determine a reference picture list for blocks in an inter mode that belong to a picture, based on whether there is the restriction condition of reference picture lists and the modification possibility of reference picture lists that are previously determined.

If it is possible to combine the reference picture lists determined in the current slice for each of slices that belong to the same picture, the image data decoder 230 according to another embodiment may determine whether there are reference picture lists combined by using reference pictures of the L0 list and the L1 list. If there are combined reference picture lists determined in the current slice for each of slices that belong to the same picture, a modification possibility of the combined reference picture lists may be determined.

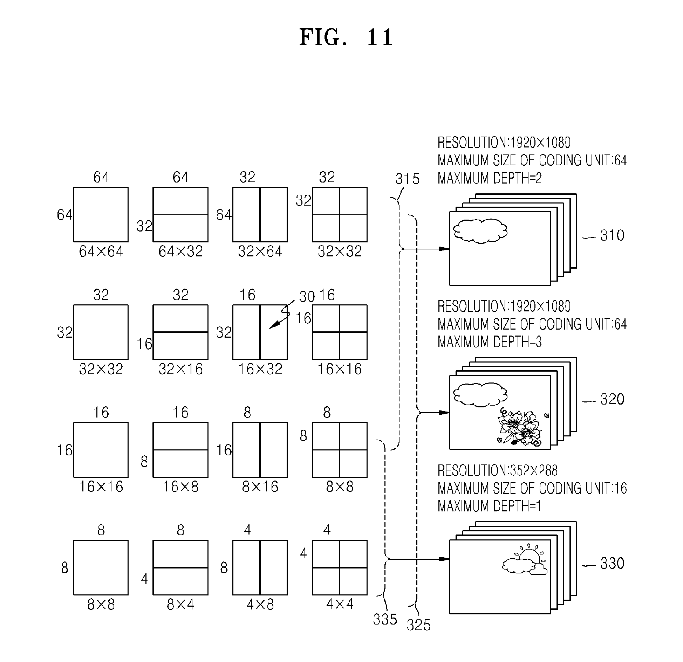

FIG. 11 is a diagram for describing a concept of coding units according to an embodiment of the present invention.

A size of a coding unit may be expressed in width x height, and may be 64x64, 32x32, 16x16, and 8x8. A coding unit of 64x64 may be split into partitions of 64x64, 64x32, 32x64, or 32x32, a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 11 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the video data 310 may include a maximum coding unit having a long axis size of 64, and coding units having long axis sizes of 32 and 16 since depths are deepened to two layers by splitting the maximum coding unit twice. Meanwhile, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

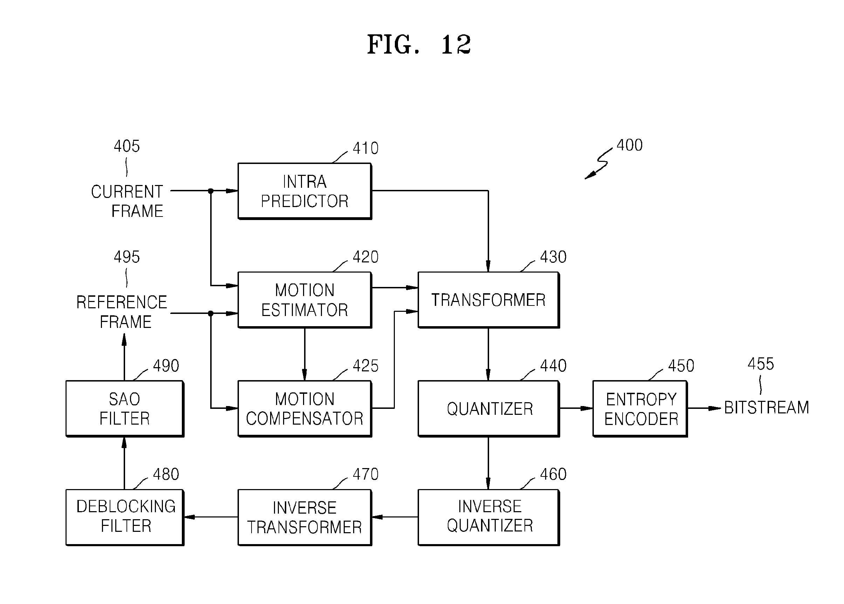

FIG. 12 is a block diagram of an image encoder 400 based on coding units, according to an embodiment of the present invention.

The image encoder 400 according to an embodiment performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 perform inter estimation and motion compensation on coding units in an inter mode from among the current frame 405 by using the current frame 405 and a reference frame 495.

Data output from the intra predictor 410, the motion estimator 420, and the motion compensator 425 is output as quantized transformation coefficients through a transformer 430 and a quantizer 440. The quantized transformation coefficients are restored as data in a spatial domain through an inverse quantizer 460 and an inverse transformer 470, and the restored data in the spatial domain is output as the reference frame 495 after being post-processed through a deblocking unit 480 and a loop filtering unit 490. The quantized transformation coefficients may be output as a bitstream 455 through an entropy encoder 450.

In order for the image encoder 400 to be applied in the video encoding apparatus 100 according to an embodiment, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the loop filtering unit 490 perform operations based on each coding unit from among coding units having a tree structure while considering the maximum depth of each maximum coding unit.

Specifically, the intra predictor 410, the motion estimator 420, and the motion compensator 425 determines partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

The motion estimator 420 and the motion compensator 425 may determine reference picture lists based on the inter prediction method described with reference to FIGS. 1A and 1B above, determine reference pictures among the reference picture lists, and perform inter prediction.

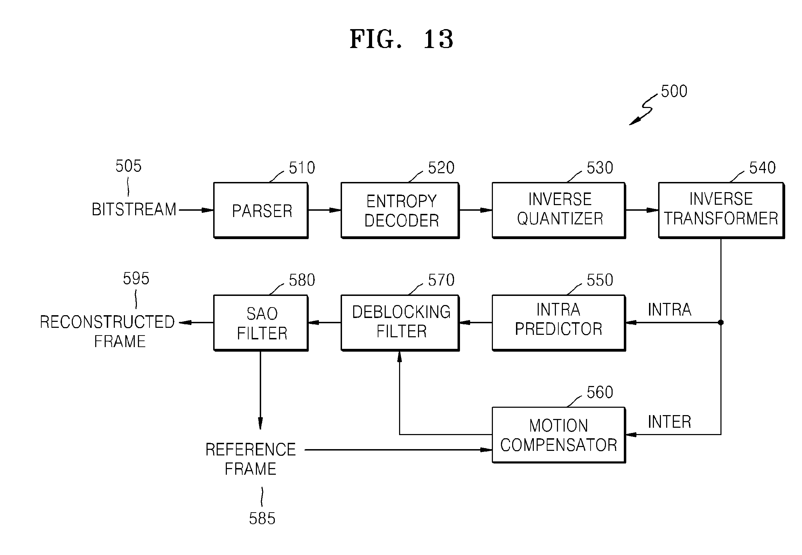

FIG. 13 is a block diagram of an image decoder 500 based on coding units, according to an embodiment of the present invention.

A parser 510 parses encoded image data to be decoded and information about encoding required for decoding from a bitstream 505. The encoded image data is output as inverse quantized data through an entropy decoder 520 and an inverse quantizer 530, and the inverse quantized data is restored to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which passed through the intra predictor 550 and the motion compensator 560, may be output as a restored frame 595 after being post-processed through a deblocking unit 570 and a loop filtering unit 580. Also, the image data that is post-processed through the deblocking unit 570 and the loop filtering unit 580 may be output as the reference frame 585.

In order to decode the image data in the image data decoder 230 of the video decoding apparatus 200, the image decoder 500 according to an embodiment may perform operations that are performed after the parser 510 performs an operation.

In order for the image decoder 500 to be applied in the video decoding apparatus 200 according to an embodiment, all elements of the image decoder 500, i.e., the parser 510, the entropy decoder 520, the inverse quantizer 530, the inverse transformer 540, the intra predictor 550, the motion compensator 560, the deblocking unit 570, and the loop filtering unit 580 perform operations based on coding units having a tree structure for each maximum coding unit.

Specifically, the intra prediction 550 and the motion compensator 560 perform operations based on partitions and a prediction mode for each of the coding units having a tree structure, and the inverse transformer 540 perform operations based on a size of a transformation unit for each coding unit.

The motion compensator 560 may determine reference picture lists based on the inter prediction method described with reference to FIGS. 1A and 1B above, determine reference pictures among the reference picture lists, and perform motion compensation.

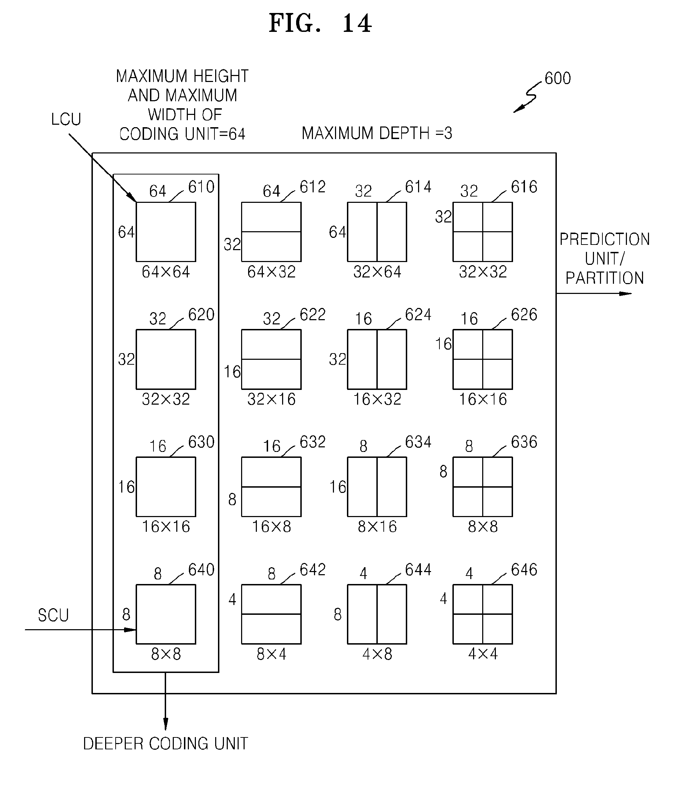

FIG. 14 is a diagram illustrating deeper coding units according to depths, and partitions, according to an embodiment of the present invention.

The video encoding apparatus 100 according to an embodiment and the video decoding apparatus 200 according to an embodiment use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units according to an embodiment, according to an embodiment of the present invention, the maximum height and the maximum width of the coding units are each 64, and the maximum depth is 3. In this case, the maximum depth refers to a total number of times the coding unit is split from the maximum coding unit to the minimum coding unit. Since a depth deepens along a vertical axis of the hierarchical structure 600 according to an embodiment, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3 exist. The coding unit 640 having the size of 8x8 and the depth of 3 is a minimum coding unit.

The prediction unit and the partitions of a coding unit are arranged along the horizontal axis according to each depth. In other words, if the coding unit 610 having the size of 64x64 and the depth of 0 is a prediction unit, the prediction unit may be split into partitions included in the encoding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

In order to determine the at least one coded depth of the coding units constituting the maximum coding unit 610, the coding unit determiner 120 of the video encoding apparatus 100 according to an embodiment performs encoding for coding units corresponding to each depth included in the maximum coding unit 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

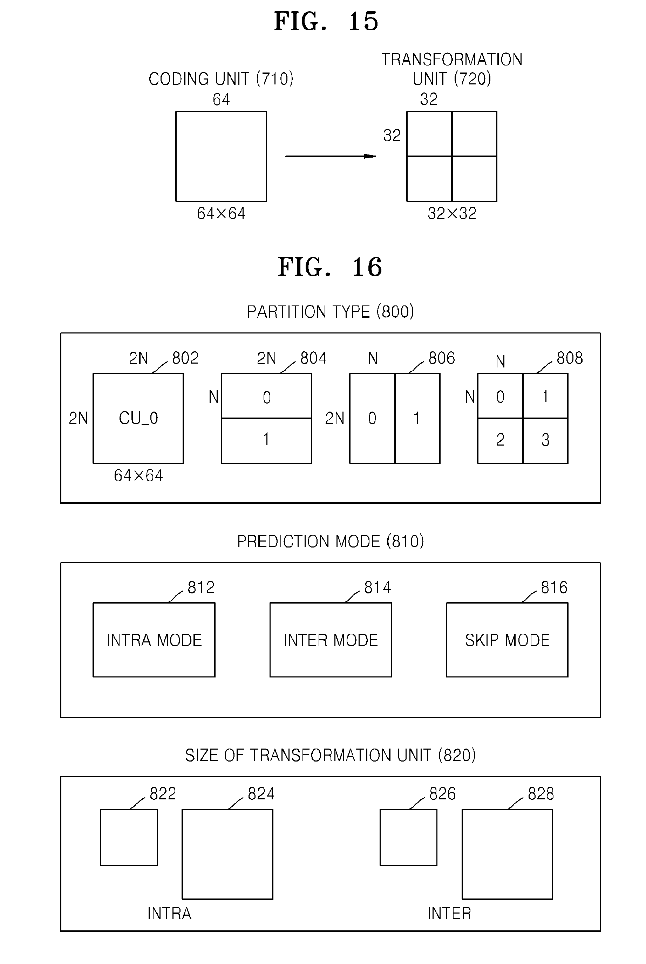

FIG. 15 is a diagram for describing a relationship between a coding unit 710 and transformation units 720, according to an embodiment of the present invention.

The video encoding apparatus 100 according to an embodiment or the video decoding apparatus 200 according to an embodiment encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 according to an embodiment or the video decoding apparatus 200 according to an embodiment, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 16 is a diagram for describing encoding information of coding units corresponding to a coded depth, according to an embodiment of the present invention.

The output unit 130 of the video encoding apparatus 100 according to an embodiment may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 according to an embodiment may extract and use the information 800, 810, and 820 for decoding, according to each deeper coding unit.

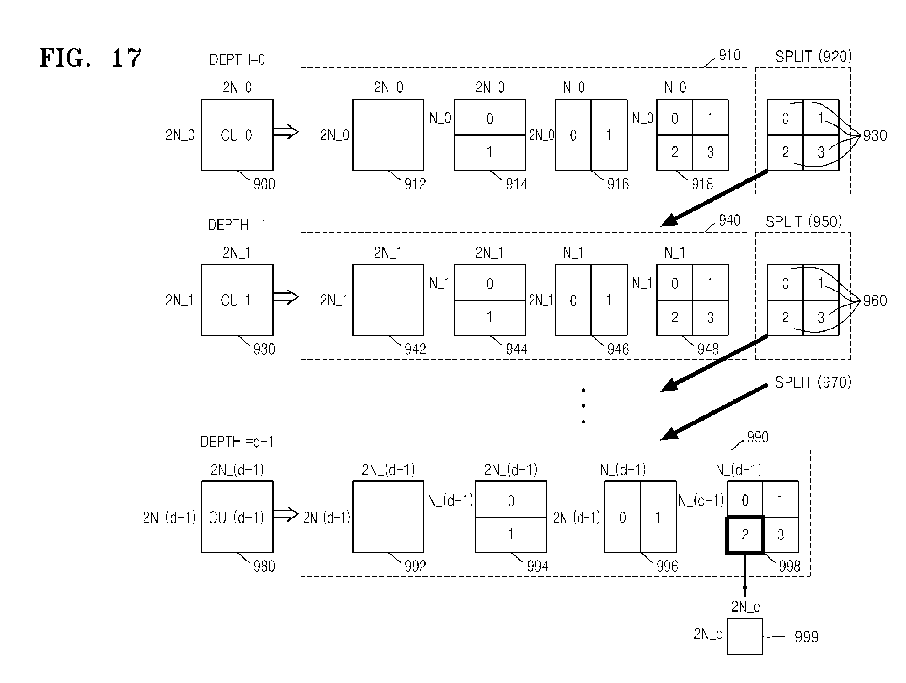

FIG. 17 is a diagram of deeper coding units according to depths, according to an embodiment of the present invention.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 9 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

Errors of encoding including the prediction encoding in the partition types 912 through 918 are compared, and the least encoding error is determined among the partition types. If an encoding error is smallest in one of the partition types 912 through 916, the prediction unit 910 may not be split into a lower depth.

If the encoding error is the smallest in the partition type 918, a depth is changed from 0 to 1 to split the partition type 918 in operation 920, and encoding is repeatedly performed on coding units 930 having a depth of 2 and a size of

N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1 x2N_1, a partition type 944 having a size of 2N_1xN_1, a partition type 946 having a size of N_1x2N_1, and a partition type 948 having a size of N_1xN_1.

If an encoding error is the smallest in the partition type 948, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, a split operation according to each depth may be performed until a depth becomes d-1, and split information may be encoded for up to when a depth is one of 0 to d-2. In other words, when encoding is performed until the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d and a minimum coding unit 980 having a lowermost depth of d-1 is no longer split to a lower depth, split information for the minimum coding unit 980 is not set.

A data unit 999 may be a 'minimum unit' for the current maximum coding unit. A minimum unit according to an embodiment of the present invention may be a rectangular data unit obtained by splitting a minimum coding unit 980 by 4. By performing the encoding repeatedly, the video encoding apparatus 100 may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 according to an embodiment may extract and use the information about the coded depth and the prediction unit of the coding unit 900 to decode the partition 912. The video decoding apparatus 200 may determine a depth, in which split information is 0, as a coded depth by using split information according to depths, and use information about an encoding mode of the corresponding depth for decoding.

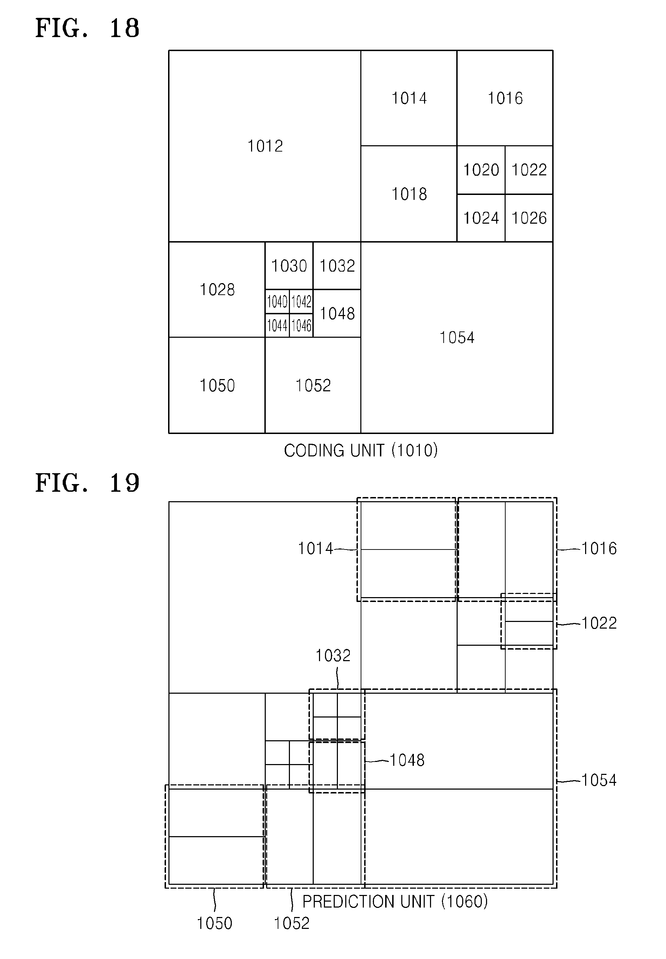

FIGS. 18 through 20 are diagrams for describing a relationship between coding units 1010, prediction units 1060, and transformation units 1070, according to an embodiment of the present invention.

The coding units 1010 are coding units having a tree structure, corresponding to coded depths determined by the video encoding apparatus 100 according to an embodiment, in a maximum coding unit. The prediction units 1060 are partitions of prediction units of each of the coding units 1010, and the transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 according to an embodiment may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding and decoding apparatuses 100 and 200 according to an embodiment.

Table 1

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | |
| Intra Inter Skip (Only 2Nx2N) | Symmetrical Partition Type | Asymmetrical Partition Type | Split Information 0 of Transformation Unit | Split Information 1 of Transformation Unit | Repeatedly Encode Coding Units having Lower Depth of d+1 |
| | 2Nx2N 2NxN Nx2N NxN | 2NxnU 2NxnD nLx2N nRx2N | 2Nx2N | NxN (Symmetrical Type) N/2xN/2 (Asymmetrical Type) | |

The output unit 130 of the video encoding apparatus 100 according to an embodiment may output the encoding information about the coding units having a tree structure, and the image data and encoding information extractor 220 of the video decoding apparatus 200 according to an embodiment may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure may include at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred to for predicting the current coding unit.

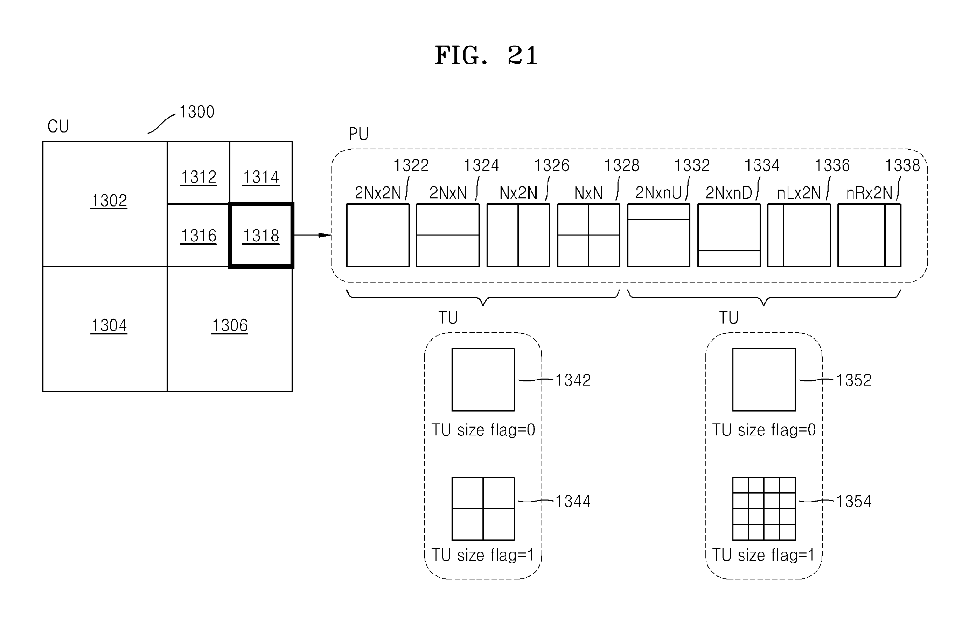

FIG. 21 is a diagram for describing a relationship between a coding unit, a prediction unit or a partition, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Split information (TU (Transformation Unit)size flag) of a transformation unit is a type of a transformation index. The size of the transformation unit corresponding to the transformation index may be changed according to a prediction unit type or partition type of the coding unit.

For example, when the partition type is set to be symmetrical, i.e. the partition type 1322, 1324, 1326, or 1328, a transformation unit 1342 having a size of 2Nx2N is set if split information (TU size flag) of a transformation unit is 0, and a transformation unit 1344 having a size of NxN is set if a TU size flag is 1.

When the partition type is set to be asymmetrical, i.e., the partition type 1332, 1334, 1336, or 1338, a transformation unit 1352 having a size of 2Nx2N is set if a TU size flag is 0, and a transformation unit 1354 having a size of N/2xN/2 is set if a TU size flag is 1.

Referring to FIG. 21, the TU size flag is a flag having a value or 0 or 1, but the TU size flag according to an embodiment is not limited to 1 bit, and a transformation unit may be hierarchically split having a tree structure while the TU size flag increases from 0. Split information (TU size flag) of a transformation unit may be an example of a transformation index.

In this case, the size of a transformation unit that has been actually used may be expressed by using a TU size flag of a transformation unit, according to an embodiment of the present invention, together with a maximum size and minimum size of the transformation unit. According to an embodiment of the present invention, the video encoding apparatus 100 is capable of encoding maximum transformation unit size information, minimum transformation unit size information, and a maximum TU size flag. A result of encoding the maximum transformation unit size information, the minimum transformation unit size information, and the maximum TU size flag may be inserted into an SPS. According to an embodiment of the present invention, the video decoding apparatus 200 may decode video by using the maximum transformation unit size information, the minimum transformation unit size information, and the maximum TU size flag.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$CurrMinTuSize$$
$$= max (MinTransformSize, RootTuSize/(2^{MaxTransformSizeIndex})) \ldots (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment of the present invention, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize) \ldots\ldots\ldots (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) \ldots\ldots\ldots(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present invention is not limited thereto.

According to the video encoding method based on coding units having a tree structure as described with reference to FIGS. 9 through 21, image data of a spatial region is encoded for each coding unit of a tree structure. According to the video decoding method based on coding units having a tree structure, decoding is performed for each maximum coding unit to restore image data of a spatial region. Thus, a picture and a video that is a picture sequence may be restored. The restored video may be reproduced by a reproducing apparatus, stored in a storage medium, or transmitted through a network.

The embodiments according to the present invention may be written as computer programs and may be implemented in general-use digital computers that execute the programs using a computer readable recording medium. Examples of the computer readable recording medium include magnetic storage media (e.g., ROM, floppy disks, hard disks, etc.) and optical recording media (e.g., CD-ROMs, or DVDs).

For convenience of description, a video encoding method according to the inter prediction method, the motion prediction method, or the motion compensation method, which has been described with reference to FIGS. 1A through 21, will be collectively referred to as a 'video encoding method according to the present invention'. In addition, the video decoding method according to the inter prediction method or the motion compensation method, which has been described with reference to FIGS. 1A through 20, will be referred to as a 'video decoding method according to the present invention'.

A video encoding apparatus including the inter prediction apparatus 10, the motion prediction apparatus 20, the motion compensation apparatus 30, the video encoding apparatus 100, or the image encoder 400, which has been described with reference to FIGS. 1A through 21, will be referred to as a 'video encoding apparatus according to the present invention'. In addition, a video decoding apparatus including the inter prediction apparatus 10, the motion compensation apparatus 30, the video decoding apparatus 200, or the image decoder 500, which has been descried with reference to FIGS. 1A through 20, will be referred to as a 'video decoding apparatus according to the present invention'.

A computer readable recording medium storing a program, e.g., a disc 26000, according to an embodiment of the present invention will now be described in detail.

FIG. 22 illustrates a physical structure of a disc 26000 that stores a program, according to an embodiment of the present invention. The disc 26000 which is a storage medium may be a hard drive, a compact disc-read only memory (CD-ROM) disc, a Blu-ray disc, or a digital versatile disc (DVD). The disc 260000 includes a plurality of concentric tracks Tf each being divided into a specific number of sectors Se in a circumferential direction of the disc 26000. In a specific region of the disc 260000 according to an embodiment, a program that executes a method of determining a quantization parameter, a video encoding method, and a video decoding method as described above may be assigned and stored.

A computer system embodied using a storage medium that stores a program for executing a video encoding method and a video decoding method as described above will now be described with reference to FIG. 23.

FIG. 23 illustrates a disc drive 26800 that records and reads a program by using a disc 26000. A computer system 26700 may store a program that executes at least one of a video encoding method and a video decoding method according to an embodiment of the present invention, in the disc 26000 via the disc drive 26800. To run the program stored in the disc 26000 in the computer system 26700, the program may be read from the disc 26000 and be transmitted to the computer system 26700 by using the disc drive 26800.

The program that executes at least one of a video encoding method and a video decoding method according to an embodiment of the present invention may be stored not only in the disc 26000 illustrated in FIGS. 22 and 23 but also in a memory card, a ROM cassette, or a solid state drive (SSD).

A system to which the video encoding method and a video decoding method described above are applied will be described below.

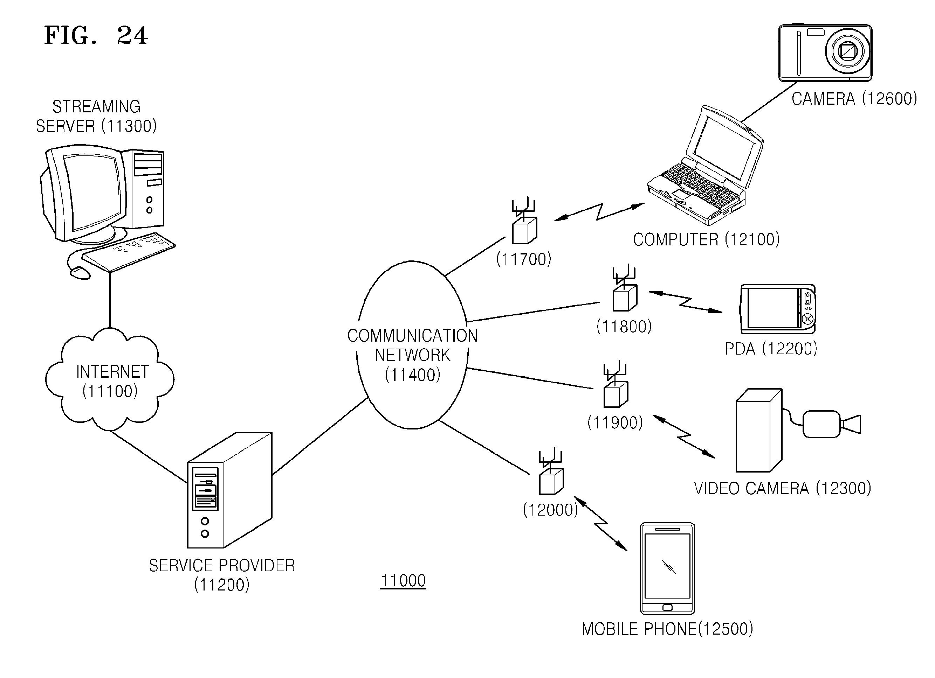

FIG. 24 illustrates an entire structure of a content supply system 11000 that provides a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to that illustrated in FIG. 24, and devices may be selectively connected thereto. The plurality of independent devices may be directly connected to the communication network 11400, rather than via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding of video may be stored in a computer readable recording medium, e.g., a CD-ROM disc, a floppy disc, a hard disc drive, an SSD, or a memory card, which may be accessible by the computer 12100.

If video data is captured by a camera built into the mobile phone 12500, the video data may be received from the mobile phone 12500.

The video data may also be encoded by a large scale integrated circuit (LSI) system installed in the video camera 12300, the mobile phone 12500, or the camera 12600.

According to an embodiment of the present invention, the content supply system 11000 may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to an embodiment of the present invention.

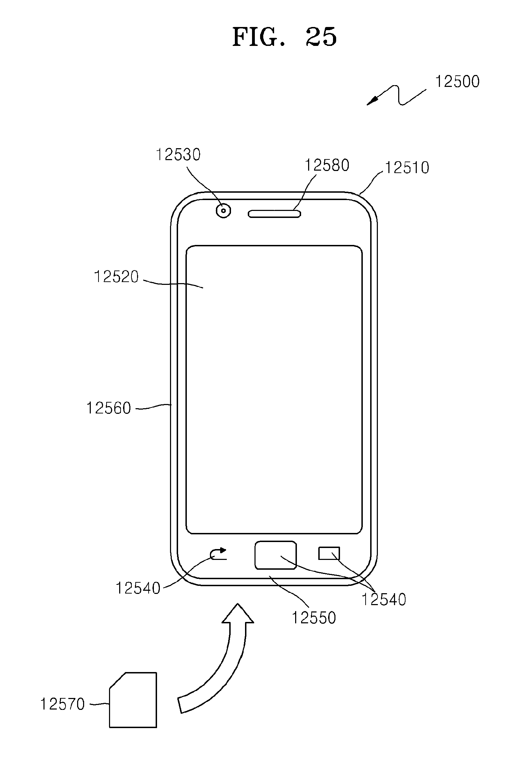

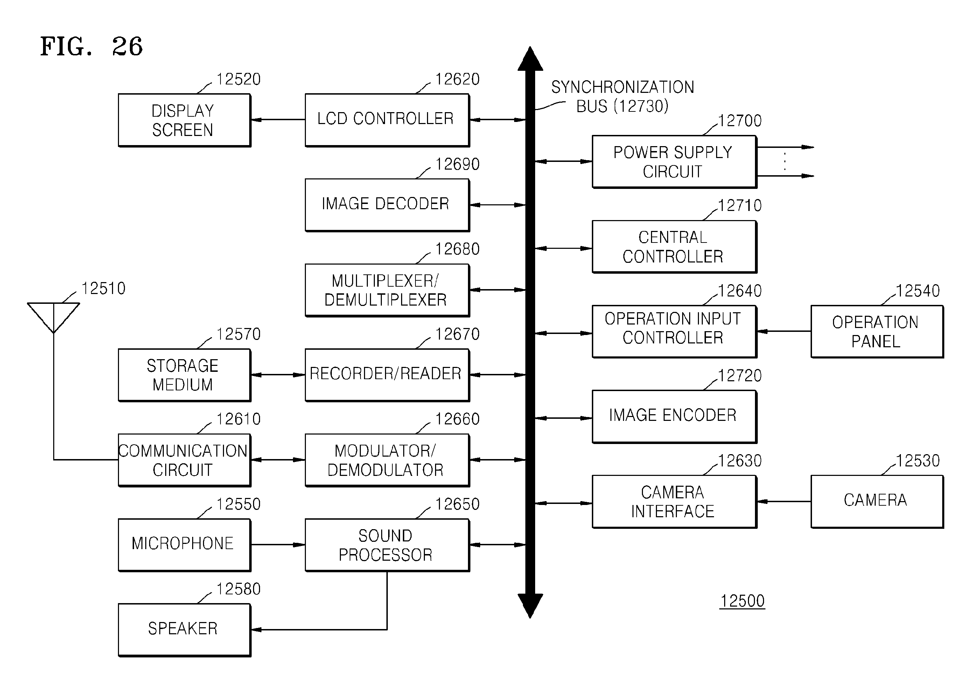

The mobile phone 12500 included in the content supply system 11000 according to an embodiment of the present invention will now be described in greater detail with referring to FIGS. 25 and 26.

FIG. 25 illustrates an external structure of a mobile phone 12500 to which a video encoding method and a video decoding method are applied, according to an embodiment of the present invention. The mobile phone 12500 may be a smart phone, the functions of which are not limited and a large part of the functions of which may be changed or expanded.

The mobile phone 12500 includes an internal antenna 12510 via which a radio-frequency (RF) signal may be exchanged with the wireless base station 12000 of FIG. 24, and includes a display screen 12520 for displaying images captured by a camera 1253 or images that are received via the antenna 12510 and decoded, e.g., a liquid crystal display (LCD) or an organic light-emitting diodes (OLED) screen. The smart phone 12510 includes an operation panel 12540 including a control button and a touch panel. If the display screen 12520 is a touch screen, the operation panel 12540 further includes a touch sensing panel of the display screen 12520. The smart phone 12510 includes a speaker 12580 for outputting voice and sound or another type sound output unit, and a microphone 12550 for inputting voice and sound or another type sound input unit. The smart phone 12510 further includes the camera 12530, such as a charge-coupled device (CCD) camera, to capture video and still images. The smart phone 12510 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 26 illustrates an internal structure of the mobile phone 12500, according to an embodiment of the present invention. To systemically control parts of the mobile phone 12500 including the display screen 12520 and the operation panel 12540, a power supply circuit 12700, an operation input controller 12640, an image encoding unit 12720, a camera interface 12630, an LCD controller 12620, an image decoding unit 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a random access memory (RAM).

While the mobile phone 12500 transmits communication data to the outside, a digital signal is generated in the mobile phone 12500 under control of the central controller. For example, the sound processor 12650 may generate a digital sound signal, the image encoding unit 12720 may generate a digital image signal, and text data of a message may be generated via the operation panel 12540 and the operation input controller 12640. When a digital signal is delivered to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12610 via the operation input controller 12640. Under control of the central controller 12610, the text data is transformed into a transmission signal via the modulation/demodulation unit 12660 and the communication circuit 12610 and is transmitted to the wireless base station 12000 via the antenna 12510.

To transmit image data in the data communication mode, image data captured by the camera 12530 is provided to the image encoding unit 12720 via the camera interface 12630. The captured image data may be directly displayed on the display screen 12520 via the camera interface 12630 and the LCD controller 12620.

A structure of the image encoding unit 12720 may correspond to that of the video encoding apparatus 100 described above. The image encoding unit 12720 may transform the image data received from the camera 12530 into compressed and encoded image data according to the video encoding method described above, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be delivered to the multiplexer/demultiplexer 12680.

The multiplexer/demultiplexer 12680 multiplexes the encoded image data received from the image encoding unit 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 1266 and the sound processor 12650, and the analog sound signal is output via the speaker 12580, under control of the central controller 12710.

When in the data communication mode, data of a video file accessed at an Internet website is received, a signal received from wireless base station 12000 via the antenna 12510 is output as multiplexed data via the modulation/demodulation unit 1266, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoding unit 12690 may correspond to that of the video decoding apparatus 200 described above. The image decoding unit 1269 may decode the encoded video data to obtain restored video data and provide the restored video data to the display screen 12520 via the LCD controller 12602, according to the video decoding method described above.

Thus, the data of the video file accessed at the Internet website may be displayed on the display screen 12520. At the same time, the sound processor 1265 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to an embodiment of the present invention, may be a transceiving terminal including only the video encoding apparatus, or may be a transceiving terminal including only the video decoding apparatus.

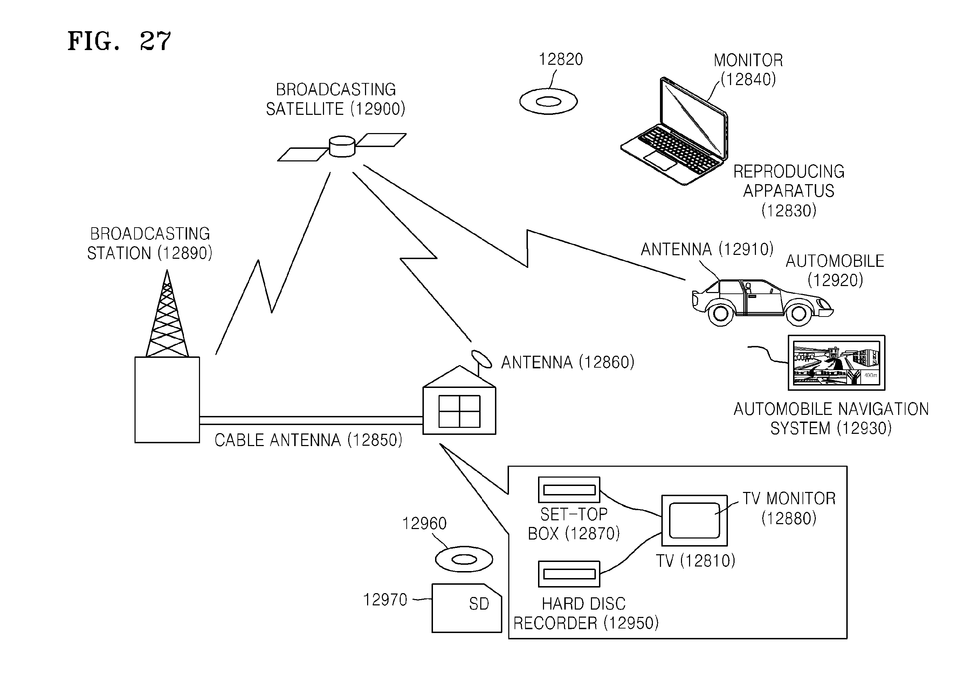

A communication system according to the present invention is not limited to the communication system described above with reference to FIG. 24. For example, FIG. 27 illustrates a digital broadcasting system employing a communication system, according to an embodiment of the present invention. The digital broadcasting system of FIG. 27 may receive a digital broadcast transmitted via a satellite or a terrestrial network by using a video encoding apparatus and a video decoding apparatus according to an embodiment of the present invention.

Specifically, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When a video decoding apparatus according to an embodiment of the present invention is implemented in a reproducing apparatus 12830, the reproducing apparatus 12830 may parse and decode an encoded video stream recorded on a storage medium 12820, such as a disc or a memory card to restore digital signals. Thus, the restored video signal may be reproduced, for example, on a monitor 12840.

In the set-top box 12870 connected to the antenna 12860 for a satellite/terrestrial broadcast or a cable antenna 12850 for receiving a cable television (TV) broadcast, a video decoding apparatus according to an embodiment of the present invention may be installed. Data output from the set-top box 12870 may also be reproduced on a TV monitor 12880.

As another example, a video decoding apparatus according to an embodiment of the present invention may be installed in the TV receiver 12810 instead of the set-top box 12870.

An automobile 12920 including an appropriate antenna 12910 may receive a signal transmitted from the satellite 1290 or the wireless base station 11700. A decoded video may be reproduced on a display screen of an automobile navigation system 12930 built into the automobile 12920.

A video signal may be encoded by a video encoding apparatus according to an embodiment of the present invention and may then be stored in a storage medium. Specifically, an image signal may be stored in a DVD disc 12960 by a DVD recorder or may be stored in a hard disc by a hard disc recorder 12950. As another example, the video signal may be stored in an SD card 12970. If the hard disc recorder 12950 includes a video decoding apparatus according to an embodiment of the present invention, a video signal recorded on the DVD disc 12960, the SD card 12970, or another storage medium may be reproduced on the TV monitor 12880.

The automobile navigation system 12930 may not include the camera 12530, the camera interface 12630, and the image encoding unit 12720 of FIG. 26. For example, the computer 12100 and the TV receiver 12810 may not be included in the camera 12530, the camera interface 12630, or the image encoding unit 12720 of FIG. 26.

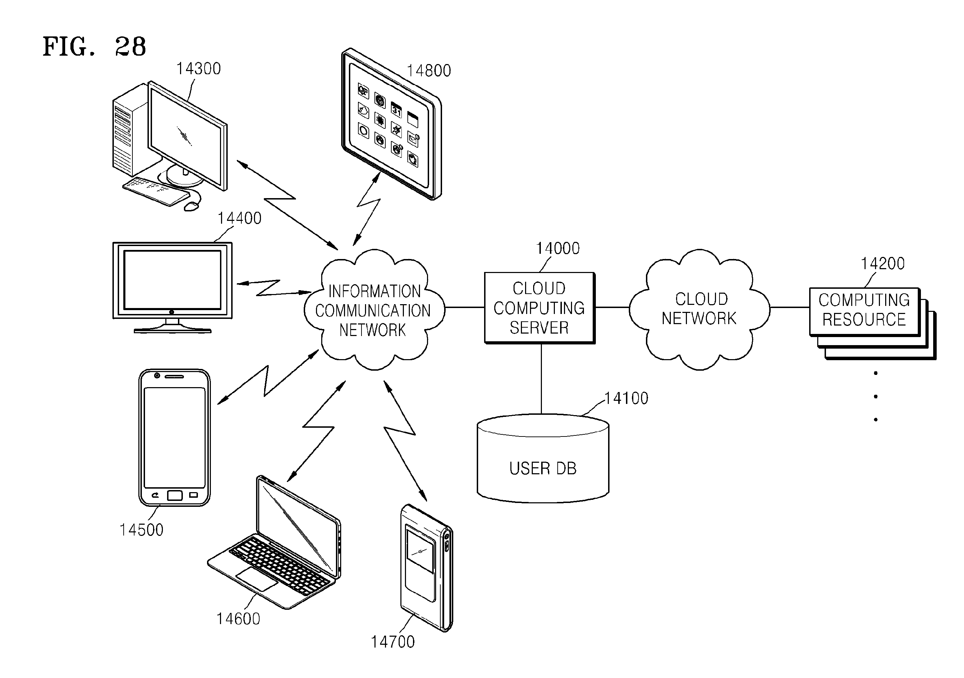

FIG. 28 illustrates a network structure of a cloud computing system using a video encoding apparatus and a video decoding apparatus, according to an embodiment of the present invention.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, storage, an operating system (OS), and security, in his/her own terminal in order to use them, but may select and use desired services from among services in a virtual space generated through the virtualization technology, at a desired point of time.

A user terminal of a specified service user is connected to the cloud computing server 14100 via a data communication network including the Internet and a mobile telecommunication network. User terminals may be provided with cloud computing services, and particularly video reproduction services, from the cloud computing server 14100. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14100 may combine the plurality of computing resources 14200 distributed in a cloud network and provide user terminals with a result of the combining. The plurality of computing resources 14200 may include various data services, and may include data uploaded from user terminals. As described above, the cloud computing server 14100 may provide user terminals with desired services by combining video databases distributed in different regions according to the virtualization technology.

User information about users who has subscribed to a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14100 searches for and reproduces this video service, based on the user DB 14100. When the smart phone 14500 receives a video data stream from the cloud computing server 14100, a process of reproducing video by decoding the video data stream is similar to an operation of the mobile phone 12500 described above with reference to FIG. 25.

The cloud computing server 14100 may refer to a reproduction history of a desired video service, stored in the user DB 14100. For example, the cloud computing server 14100 receives a request to reproduce a video stored in the user DB 14100, from a user terminal. If this video was being reproduced, then a method of streaming this video, performed by the cloud computing server 14100 may vary according to the request from the user terminal, i.e., according to whether the video will be reproduced, starting from a start thereof or a pausing point thereof. For example, if the user terminal requests to reproduce the video, starting from the start thereof, the cloud computing server 14100 transmits streaming data of the video starting from a first frame thereof to the user terminal. If the user terminal requests to reproduce the video, starting from the pausing point thereof, the cloud computing server 14100 transmits streaming data of the video starting from a frame corresponding to the pausing point, to the user terminal.

In this case, the user terminal may include a video decoding apparatus as described above with reference to FIGS. 1A through 21. As another example, the user terminal may include a video encoding apparatus as described above with reference to FIGS. 1A through 21. Alternatively, the user terminal may include both the video decoding apparatus and the video encoding apparatus as described above with reference to FIGS. 1A through 21.

Various applications of a video encoding method, a video decoding method, a video encoding apparatus, and a video decoding apparatus according to embodiments of the present invention described above with reference to FIGS. 1A through 21 have been described above with reference to FIGS. 22 through 28. However, methods of storing the video encoding method and the video decoding method in a storage medium or methods of implementing the video encoding apparatus and the video decoding apparatus in a device according to various embodiments of the present invention described above with reference to FIGS. 1A through 21 are not limited to the embodiments described above with reference to FIGS. 22 through 28.

While the present invention has been particularly shown and described with reference to exemplary embodiments thereof, it will be understood by those of ordinary skill in the art that various changes in form and details may be made therein without departing from the spirit and scope according to the present invention as defined by the following claims.

**Claims**

1. An inter prediction method comprising:

   determining whether a restriction condition exists for identity of reference picture lists of slices of the same slice type among slices included in a same picture;
   determining a modification possibility of reference picture lists determined in a same slice; and
   determining reference picture lists for blocks in an inter mode that belong to the same slice based on the determination of whether the restriction condition exists and the determined modification possibility of the reference picture lists.

2. The inter prediction method of claim 1, wherein the determining of the modification possibility of the reference picture lists comprises: independently from the determination of whether the restriction condition exists, determining the modification possibility of the reference picture lists.

3. The inter prediction method of claim 1, wherein the determining of whether the restriction condition exists comprises: determining whether the restriction condition exists for reference picture lists determined for blocks that belong to a same sequence, and
   wherein the determining of the modification possibility of the reference picture lists comprises: determining the modification possibility of the reference picture lists determined for the blocks that belong to the same sequence.

4. The inter prediction method of claim 3, wherein the determining of the modification possibility of the reference picture lists comprises: independently from the modification possibility of the reference picture lists, determining a combination possibility of a first reference picture list and a second reference picture list that are determined for the blocks that belong to the same slice.

5. The inter prediction method of claim 4, wherein the determining of the combination possibility comprises: if it is possible to combine reference picture lists determined in a current slice, determining whether reference picture lists exists, the reference picture lists combined by using reference pictures of the first reference picture list and the second reference picture list for each slice; and
   if there are combined reference picture lists determined in the current slice, determining a modification possibility of the combined reference picture lists for each slice.

6. The inter prediction method of claim 3, wherein the determining of whether the restriction condition exists comprises: parsing, from a sequence parameter set (SPS) of a received bitstream, information indicating whether the restriction condition exists; and
   wherein the determining of the modification possibility of the reference picture lists comprises: irrespective of the determination of whether the restriction condition exists, parsing information indicating the modification possibility of the reference picture lists from the SPS.

7. The inter prediction method of claim 6, wherein the determining of the combination possibility comprises: parsing information indicating the combination possibility of the first reference picture list and the second reference picture list from the SPS of the received bitstream,
   wherein the determining of whether there are reference picture lists combined comprises: parsing, from a slice header of the received bitstream, information indicating whether there are reference picture lists combined, and
   wherein the determining of the modification possibility of the combined reference picture lists comprises: parsing, from the slice header, information indicating the modification possibility of the combined reference picture lists.

8. The inter prediction method of claim 6, wherein the determining of the reference picture lists comprises:

   parsing a reference index, a motion vector, and a residue for each of the blocks in the inter mode that belong to the picture from the received bitstream;
   determining at least one of the first reference picture list and the second reference picture list by using the parsed reference index;
   determining at least one reference picture for each of the blocks by using the determination of whether the restriction condition exists, the determined modification possibility, and the determined at least one of the first reference picture list and the second reference picture list; and
   performing motion compensation by using the determined reference index, motion vector, and residue for each of the blocks and generating a reconstruction image.

9. The inter prediction method of claim 3, further comprising:

encoding information indicating whether the restriction condition exists and inserting the information into an SPS of the bitstream; and
irrespective of the determined whether the restriction condition exists, encoding information indicating the modification possibility of the reference picture lists and inserting the information into the SPS.

10. The inter prediction method of claim 9, further comprising:

encoding information indicating the combination possibility of the first reference picture list and the second reference picture list and inserting the information into the SPS;
encoding information indicating whether reference picture lists combined exist and inserting the information into the slice header of the bitstream; and
encoding information indicating the modification possibility of the combined reference picture lists and inserting the information into the slice header.

11. The inter prediction method of claim 9, further comprising:

determining at least one reference picture for each of the blocks by using the determined reference picture lists;
performing motion prediction by using the determined at least one reference picture for each of the blocks and determining a residue; and
encoding a reference index indicating the determined at least one reference picture for each of the blocks and the residue and inserting the encoded reference index and the residue into a block of the bitstream.

12. An inter prediction apparatus comprising:

a reference picture list determiner for determining whether a restriction condition exists for identity of reference picture lists of slices of a same slice type among slices included in a same picture, determining a modification possibility of reference picture lists determined in the same slice, and determining reference picture lists for blocks in an inter mode that belong to the same slice based on the determination of whether the restriction condition exists and the determined modification possibility of the reference picture lists; and
an inter predictor for performing inter prediction for each of the blocks by using the determined reference picture lists.

13. The inter prediction apparatus of claim 12,
wherein the reference picture list determiner determines at least one of a first reference picture list and a second reference picture list by using a reference index determined for each of the blocks in the inter mode that belong to the picture, and determines at least one reference picture for each of the blocks by using at least one of the determination of whether the restriction condition exists, the determined modification possibility, and the determined at least one of the first reference picture list and the second reference picture list, and
wherein the inter predictor performs motion compensation by using the determined at least one reference picture for each of the blocks, a motion vector, and a residue, and generates a reconstruction image.

14. The inter prediction apparatus of claim 12,
wherein the reference picture list determiner determines at least one of a first reference picture list and a second reference picture list by using a reference index determined for each of the blocks in the inter mode that belong to the picture, and determines at least one reference picture for each of the blocks by using at least one of the determination of whether the restriction condition exists, the determined modification possibility, and the determined at least one of the first reference picture list and the second reference picture list, and
wherein the inter predictor performs motion prediction by using the determined at least one reference picture for each of the blocks, and generates a reconstruction image.

15. A computer readable recording medium having recorded thereon a program for executing the inter prediction method of claim 1.

# FIG. 1A

REFERENCE PICTURE LIST DETERMINER 12 → INTER PREDICTOR 14

# FIG. 1B

START

DETERMINE WHETHER RESTRICTION CONDITION EXISTS FOR REFERENCE PICTURE LISTS IN THE SAME PICTURE — 111

DETERMINE MODIFICATION POSSIBILITY OF REFERENCE PICTURE LISTS IN THE SAME SLICE — 112

DETERMINE REFERENCE PICTURE LIST FOR EACH SLICE — 113

END

# FIG. 2A

~20

REFERENCE PICTURE
LIST DETERMINER
/12

→ MOTION
PREDICTOR
/24 →

# FIG. 2B

( START )

DETERMINE WHETHER RESTRICTION CONDITION EXISTS
FOR REFERENCE PICTURE LISTS IN THE SAME PICTURE ⎯111

DETERMINE MODIFICATION POSSIBILITY OF
REFERENCE PICTURE LISTS IN THE SAME SLICE ⎯112

DETERMINE REFERENCE PICTURE LIST FOR EACH SLICE ⎯113

PERFORM MOTION PREDICTION BY USING
USING REFERENCE BLOCK FOR EACH BLOCK ⎯214

( END )

# FIG. 3A

30

12

34

| REFERENCE PICTURE LIST DETERMINER | → | MOTION COMPENSATORS |
|---|---|---|

# FIG. 3B

START

| DETERMINE WHETHER RESTRICTION CONDITION EXISTS FOR REFERENCE PICTURE LISTS IN THE SAME PICTURE | 111 |
|---|---|

| DETERMINE MODIFICATION POSSIBILITY OF REFERENCE PICTURE LISTS IN THE SAME SLICE | 112 |
|---|---|

| DETERMINE REFERENCE PICTURE LIST FOR EACH SLICE | 113 |
|---|---|

| PERFORM MOTION COMPENSATION BY USING REFERENCE BLOCK FOR EACH BLOCK | 314 |
|---|---|

END

# FIG. 4

```
                          40
┌────────────────────────────────────────────┐
│ seq_parameter_set_rbsp( ) {                 │
├────────────────────────────────────────────┤
│      ...                                    │
├────────────────────────────────────────────┤
│    restricted_ref_pic_lists_flag ──── 42    │
├────────────────────────────────────────────┤
│    if( restricted_ref_pic_lists_flag ──── 44│
├────────────────────────────────────────────┤
│       lists_modification_present_flag ──── 46│
├────────────────────────────────────────────┤
│  ...                                        │
└────────────────────────────────────────────┘
```

# FIG. 5

```
                          50
┌────────────────────────────────────────────┐
│ seq_parameter_set_rbsp( ) {                 │
├────────────────────────────────────────────┤
│    ...                                       │
├────────────────────────────────────────────┤
│    restricted_ref_pic_lists_flag ──── 52    │
├────────────────────────────────────────────┤
│    lists_combination_present_flag──── 54    │
├────────────────────────────────────────────┤
│    lists_modification_present_flag ──── 56  │
├────────────────────────────────────────────┤
│    ...                                       │
└────────────────────────────────────────────┘
```

# FIG. 6

60

| seq_parameter_set_rbsp( ) { |
|---|
| ... |
| if( lists_combination_present_flag )      ～ 54 |
| ref_pic_list_combination( ) ——64 |
| if( lists_modification_present_flag ) {   ～ 56 |
| ref_pic_list_modification( ) ——68 |
| ~~ref_pic_list_combination( )~~ |
| } |
| ... |

# FIG. 7

64

| ref_pic_list_combination( ) { |
|---|
| if( slice_type == B ) { |
| ref_pic_list_combination_flag ——72 |
| if( ref_pic_list_combination_flag ) { |
| num_ref_idx_lc_active_minus1 ——74 |
| ~~ref_pic_list_modification_flag_lc~~ |
| ~~if( ref_pic_list_modification_flag_lc )~~ |
| ~~for( i =0; i <= num_ref_idx_lc_active_minus1; i++ ) {~~ |
| ~~pic_from_list_0_flag~~ |
| ~~if( ( pic_from_list_0_flag &&~~ |
| ~~num_ref_idx_l0_active_minus1 > 0 ) ││~~ |
| ~~( !pic_from_list_0_flag &&~~ |
| ~~num_ref_idx_l1_active_minus1 > 0 )~~ |
| ~~ref_idx_list_curr~~ |
| } |
| } |
| } |
| } |

76

# FIG. 8

68

```
ref_pic_list_modification( ) {

    if( slice_type  = = P  | |  slice_type  = = B ) {

        ref_pic_list_modification_flag_l0 ——82

        if( ref_pic_list_modification_flag_l0  &&  NumPocTotalCurr > 1 )

            for( i = 0; i <= num_ref_idx_l0_active_minus1; i++ )

                list_entry_l0[ i ] ——83

    }

    if( slice_type  = = B ) {

        ref_pic_list_modification_flag_l1 ——85

        if( ref_pic_list_modification_flag_l1  &&  NumPocTotalCurr > 1 )

            for( i = 0; i <= num_ref_idx_l1_active_minus1; i++ )

                list_entry_l1[ i ] ——86

    }

    if( ref_pic_list_combination_flag ) {

        ref_pic_list_modification_flag_lc ——87

        if( ref_pic_list_modification_flag_lc )

            for( i =0; i <= num_ref_idx_lc_active_minus1; i++ ) {

                pic_from_list_0_flag ——88

                if( ( pic_from_list_0_flag  &&
                    num_ref_idx_l0_active_minus1 > 0 )  | |
                    ( !pic_from_list_0_flag  &&
                    num_ref_idx_l1_active_minus1 > 0 )

                    ref_idx_list_curr ——89

            }

    }

}
```

81
84
72
76

# FIG. 9

100

| 110 | 120 | 130 |
|---|---|---|
| MAXIMUM CODING UNIT SPLITTER | CODING UNIT DETERMINER | OUTPUT UNIT |

# FIG. 10

200

| 210 | 220 | 230 |
|---|---|---|
| RECEIVER | IMAGE DATA AND ENCODING INFORMATION EXTRACTOR | IMAGE DATA DECODER |

# FIG. 11

| | | | |
|---|---|---|---|
| 64 | 64 | 32 | 32 |
| 64×64 | 64×32 | 32×64 | 32×32 |
| 32 | 32 | 16 | 16 |
| 32×32 | 32×16 | 16×32 | 16×16 |
| 16 | 16 | 8 | 8 |
| 16×16 | 16×8 | 8×16 | 8×8 |
| 8 | 8 | 4 | 4 |
| 8×8 | 8×4 | 4×8 | 4×4 |

315

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

30

335 325

FIG. 12

400

CURRENT FRAME 405

REFERENCE FRAME 495

INTRA PREDICTOR 410

MOTION ESTIMATOR 420

MOTION COMPENSATOR 425

SAO FILTER 490

DEBLOCKING FILTER 480

TRANSFORMER 430

QUANTIZER 440

INVERSE QUANTIZER 460

INVERSE TRANSFORMER 470

ENTROPY ENCODER 450

BITSTREAM 455

# FIG. 13

EP 2 838 263 A1

# FIG. 14

MAXIMUM HEIGHT
AND MAXIMUM
WIDTH OF
CODING UNIT=64

600

MAXIMUM DEPTH =3

LCU

| 64 / 610 | 64 / 612 | 32 / 614 | 32 / 616 |
| 64×64 | 64×32 | 32×64 | 32×32 |

PREDICTION
UNIT/
PARTITION

| 32 / 620 | 32 / 622 | 16 / 624 | 16 / 626 |
| 32×32 | 32×16 | 16×32 | 16×16 |

| 16 / 630 | 16 / 632 | 8 / 634 | 8 / 636 |
| 16×16 | 16×8 | 8×16 | 8×8 |

SCU

| 8 / 640 | 8 / 642 | 4 / 644 | 4 / 646 |
| 8×8 | 8×4 | 4×8 | 4×4 |

DEEPER CODING UNIT

# FIG. 15

CODING UNIT (710)

64

64×64

TRANSFORMATION
UNIT (720)

32

32

32×32

# FIG. 16

PARTITION TYPE (800)

2N  / 802

2N

2N  CU_0

64×64

2N  / 804

N

0

1

N  / 806

2N  0  1

N  / 808

N  0  1

2  3

PREDICTION MODE (810)

/ 812

INTRA MODE

/ 814

INTER MODE

/ 816

SKIP MODE

SIZE OF TRANSFORMATION UNIT (820)

/ 822    / 824

/ 826    / 828

INTRA

INTER

FIG. 17

DEPTH=0

2N_0

2N_0 | CU_0 | →
900

910    SPLIT (920)

2N_0

2N_0 |        |
912

2N_0

N_0 | 0 |
| 1 |
914

N_0

2N_0 | 0 | 1 |
916

N_0

N_0 | 0 | 1 |
| 2 | 3 |
918

| 0 | 1 |
| 2 | 3 |    → 930

DEPTH =1

2N_1

2N_1 | CU_1 | →
930

940    SPLIT (950)

2N_1

2N_1 |        |
942

2N_1

N_1 | 0 |
| 1 |
944

N_1

2N_1 | 0 | 1 |
946

N_1

N_1 | 0 | 1 |
| 2 | 3 |
948

| 0 | 1 |
| 2 | 3 |    → 960

SPLIT (970)

DEPTH =d-1

2N_(d-1)

2N_(d-1) | CU_(d-1) | →
980

990

2N_(d-1)

2N_(d-1) |        |
992

2N_(d-1)

N_(d-1) | 0 |
| 1 |
994

N_(d-1)

2N_(d-1) | 0 | 1 |
996

N_(d-1)

N_(d-1) | 0 | 1 |
| 2 | 3 |
998

2N_d

2N_d |   | — 999

FIG. 18

CODING UNIT (1010)

FIG. 19

PREDICTION UNIT (1060)

FIG. 20

TRANSFORMATION UNIT (1070)

# FIG. 21

CU ⟋1300

| | 1312 | 1314 |
|---|---|---|
| 1302 | 1316 | **1318** |
| 1304 | 1306 | |

PU

|  1322 | 1324 | 1326 | 1328 | 1332 | 1334 | 1336 | 1338 |
|---|---|---|---|---|---|---|---|
| 2Nx2N | 2NxN | Nx2N | NxN | 2NxnU | 2NxnD | nLx2N | nRx2N |

TU

TU size flag=0 —1342

TU size flag=1 —1344

TU

TU size flag=0 —1352

TU size flag=1 —1354

EP 2 838 263 A1

FIG. 22

FIG. 23

# FIG. 24

STREAMING
SERVER (11300)

INTERNET
(11100)

SERVICE PROVIDER
(11200)

COMMUNICATION
NETWORK
(11400)

11000

(11700)

CAMERA (12600)

COMPUTER (12100)

(11800)

PDA (12200)

(11900)

VIDEO CAMERA (12300)

(12000)

MOBILE PHONE(12500)

EP 2 838 263 A1

# FIG. 25

12500

12530

12580

12510

12520

12560

12540

12550

12540

12570

# FIG. 26

**FIG. 27**

EP 2 838 263 A1

# FIG. 28

14300

14800

14400

14000

CLOUD
COMPUTING
SERVER

CLOUD
NETWORK

14200

COMPUTING
RESOURCE

INFORMATION
COMMUNICATION
NETWORK

14100

USER DB

14500

14600

14700

EP 2 838 263 A1

| INTERNATIONAL SEARCH REPORT | International application No. |
|---|---|
| | **PCT/KR2013/003083** |

**A. CLASSIFICATION OF SUBJECT MATTER**

*H04N 7/36(2006.01)i*

According to International Patent Classification (IPC) or to both national classification and IPC

**B. FIELDS SEARCHED**

Minimum documentation searched (classification system followed by classification symbols)
H04N 7/36; H04N 7/24; H04N 5/93; H04N 7/32; H04N 7/26

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: preference picture list, restriction, identity, change

**C. DOCUMENTS CONSIDERED TO BE RELEVANT**

| Category* | Citation of document, with indication, where appropriate, of the relevant passages | Relevant to claim No. |
|---|---|---|
| A | KR 10-2011-0139304 A (LG ELECTRONICS INC.) 28 December 2011<br>See paragraphs [0063]-[0085] and figures 12-15. | 1-15 |
| A | KR 10-2009-0096651 A (LG ELECTRONICS INC.) 11 September 2009<br>See paragraphs [0041]-[0047] and figure 3. | 1-15 |
| A | JP 4642075 B2 (SHARP K.K.) 10 December 2010<br>See paragraphs [0088]-[0096] and figures 1 and 5-8. | 1-15 |
| A | JP 2007-184791 A (VICTOR CO. OF JAPAN LTD.) 19 July 2007<br>See paragraphs [0048]-[0055] and figures 2, 4 and 6-8. | 1-15 |
| A | US 2011-0249745 A1 (CHEN, Peisong et al.) 13 October 2011<br>See paragraphs [0035] and [0058]-[0061] and figures 1-2. | 1-15 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 JULY 2013 (30.07.2013) | **31 JULY 2013 (31.07.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

EP 2 838 263 A1

INTERNATIONAL SEARCH REPORT
Information on patent family members

International application No.

**PCT/KR2013/003083**

| Patent document cited in search report | Publication date | Patent family member | Publication date |
|---|---|---|---|
| KR 10-2011-0139304 A | 28/12/2011 | EP 2424240 A2 | 29/02/2012 |
| | | US 2012-0069903 A1 | 22/03/2012 |
| | | WO 2010-123203 A2 | 28/10/2010 |
| | | WO 2010-123203 A3 | 23/12/2010 |
| KR 10-2009-0096651 A | 11/09/2009 | AU 2007-232607 A1 | 11/10/2007 |
| | | AU 2007-232607 B2 | 16/09/2010 |
| | | CA 2647735 A1 | 11/10/2007 |
| | | CN 101449585 A | 03/06/2009 |
| | | CN 101455082 A | 10/06/2009 |
| | | CN 101455082 B | 13/02/2013 |
| | | CN 101455084 A | 10/06/2009 |
| | | CN 101461242 A | 17/06/2009 |
| | | CN 101461242 B | 03/08/2011 |
| | | CN 101473655 A | 01/07/2009 |
| | | CN 101473655 B | 08/06/2011 |
| | | CN 101491095 A | 22/07/2009 |
| | | EP 2008460 A1 | 31/12/2008 |
| | | EP 2008461 A1 | 31/12/2008 |
| | | EP 2025170 A1 | 18/02/2009 |
| | | EP 2030450 A1 | 04/03/2009 |
| | | JP 2009-532930 A | 10/09/2009 |
| | | JP 2009-532931 A | 10/09/2009 |
| | | JP 2009-532932 A | 10/09/2009 |
| | | JP 2009-532933 A | 10/09/2009 |
| | | JP 2009-532934 A | 10/09/2009 |
| | | JP 5054092 B2 | 24/10/2012 |
| | | JP 5055353 B2 | 24/10/2012 |
| | | JP 5055354 B2 | 24/10/2012 |
| | | JP 5055355 B2 | 24/10/2012 |
| | | KR 10-0934671 B1 | 31/12/2009 |
| | | KR 10-0934672 B1 | 31/12/2009 |
| | | KR 10-0934673 B1 | 31/12/2009 |
| | | KR 10-0934674 B1 | 31/12/2009 |
| | | KR 10-0934675 B1 | 31/12/2009 |
| | | KR 10-0937431 B1 | 18/01/2010 |
| | | KR 10-0943911 B1 | 24/02/2010 |
| | | KR 10-0949974 B1 | 29/03/2010 |
| | | KR 10-0949975 B1 | 29/03/2010 |
| | | KR 10-0949976 B1 | 29/03/2010 |
| | | KR 10-0949977 B1 | 29/03/2010 |
| | | KR 10-0949978 B1 | 29/03/2010 |
| | | KR 10-0949979 B1 | 29/03/2010 |
| | | KR 10-0949980 B1 | 29/03/2010 |
| | | KR 10-0949981 B1 | 29/03/2010 |
| | | KR 10-0949982 B1 | 29/03/2010 |
| | | KR 10-0949983 B1 | 29/03/2010 |
| | | KR 10-0959536 B1 | 27/05/2010 |
| | | KR 10-0959537 B1 | 27/05/2010 |

Form PCT/ISA/210 (patent family annex) (July 2009)

INTERNATIONAL SEARCH REPORT
Information on patent family members

International application No.

**PCT/KR2013/003083**

| Patent document cited in search report | Publication date | Patent family member | Publication date |
|---|---|---|---|
| | | KR 10-0959538 B1 | 27/05/2010 |
| | | KR 10-0966568 B1 | 29/06/2010 |
| | | KR 10-0966569 B1 | 30/06/2010 |
| | | KR 10-0966570 B1 | 29/06/2010 |
| | | KR 10-0998912 B1 | 08/12/2010 |
| | | KR 10-2007-0098428 A | 05/10/2007 |
| | | KR 10-2007-0098429 A | 05/10/2007 |
| | | KR 10-2007-0098430 A | 05/10/2007 |
| | | KR 10-2007-0098437 A | 05/10/2007 |
| | | KR 10-2007-0111947 A | 22/11/2007 |
| | | KR 10-2007-0111968 A | 22/11/2007 |
| | | KR 10-2007-0111969 A | 22/11/2007 |
| | | KR 10-2007-0116527 A | 10/12/2007 |
| | | KR 10-2007-0120416 A | 24/12/2007 |
| | | KR 10-2008-0007069 A | 17/01/2008 |
| | | KR 10-2008-0007086 A | 17/01/2008 |
| | | KR 10-2008-0007177 A | 17/01/2008 |
| | | KR 10-2008-0008944 A | 24/01/2008 |
| | | KR 10-2008-0015713 A | 20/02/2008 |
| | | KR 10-2008-0015714 A | 20/02/2008 |
| | | KR 10-2008-0015746 A | 20/02/2008 |
| | | KR 10-2008-0015760 A | 20/02/2008 |
| | | KR 10-2008-0022055 A | 10/03/2008 |
| | | KR 10-2008-0022063 A | 10/03/2008 |
| | | KR 10-2008-0035429 A | 23/04/2008 |
| | | KR 10-2008-0036910 A | 29/04/2008 |
| | | KR 10-2008-0050349 A | 05/06/2008 |
| | | KR 10-2008-0055685 A | 19/06/2008 |
| | | KR 10-2008-0055686 A | 19/06/2008 |
| | | KR 10-2010-0074314 A | 01/07/2010 |
| | | US 2009-0279608 A1 | 12/11/2009 |
| | | US 2009-0296811 A1 | 03/12/2009 |
| | | US 2010-0020870 A1 | 28/01/2010 |
| | | US 2010-0026882 A1 | 04/02/2010 |
| | | US 2010-0026883 A1 | 04/02/2010 |
| | | US 2010-0026884 A1 | 04/02/2010 |
| | | US 2010-0027653 A1 | 04/02/2010 |
| | | US 2010-0027654 A1 | 04/02/2010 |
| | | US 2010-0027659 A1 | 04/02/2010 |
| | | US 2010-0027660 A1 | 04/02/2010 |
| | | US 2010-0027682 A1 | 04/02/2010 |
| | | US 2010-0046619 A1 | 25/02/2010 |
| | | US 2010-0074334 A1 | 25/03/2010 |
| | | US 2010-0080293 A1 | 01/04/2010 |
| | | US 2010-0086036 A1 | 08/04/2010 |
| | | US 2010-0091843 A1 | 15/04/2010 |
| | | US 2010-0091844 A1 | 15/04/2010 |
| | | US 2010-0091845 A1 | 15/04/2010 |
| | | US 2010-0091883 A1 | 15/04/2010 |
| | | US 2010-0091884 A1 | 15/04/2010 |

Form PCT/ISA/210 (patent family annex) (July 2009)

INTERNATIONAL SEARCH REPORT
Information on patent family members

International application No.

**PCT/KR2013/003083**

| Patent document cited in search report | Publication date | Patent family member | Publication date |
|---|---|---|---|
| | | US 2010-0091885 A1 | 15/04/2010 |
| | | US 2010-0091886 A1 | 15/04/2010 |
| | | US 2010-0104012 A1 | 29/04/2010 |
| | | US 2010-0104014 A1 | 29/04/2010 |
| | | US 2010-0111169 A1 | 06/05/2010 |
| | | US 2010-0111170 A1 | 06/05/2010 |
| | | US 2010-0111171 A1 | 06/05/2010 |
| | | US 2010-0111172 A1 | 06/05/2010 |
| | | US 2010-0111173 A1 | 06/05/2010 |
| | | US 2010-0111174 A1 | 06/05/2010 |
| | | US 2010-0128787 A1 | 27/05/2010 |
| | | US 2010-0150234 A1 | 17/06/2010 |
| | | US 2010-0150235 A1 | 17/06/2010 |
| | | US 2010-0150236 A1 | 17/06/2010 |
| | | US 2010-0158112 A1 | 24/06/2010 |
| | | US 2010-0158113 A1 | 24/06/2010 |
| | | US 2010-0158114 A1 | 24/06/2010 |
| | | US 2010-0158117 A1 | 24/06/2010 |
| | | US 2010-0158118 AI | 24/06/2010 |
| | | US 2010-0177824 A1 | 15/07/2010 |
| | | US 2010-0202519 A1 | 12/08/2010 |
| | | US 2010-0202521 A1 | 12/08/2010 |
| | | US 2010-0215100 A1 | 26/08/2010 |
| | | US 2010-0260265 A1 | 14/10/2010 |
| | | US 2010-0316135 A1 | 16/12/2010 |
| | | US 2010-0316136 A1 | 16/12/2010 |
| | | US 2010-0316360 A1 | 16/12/2010 |
| | | US 2010-0316361 A1 | 16/12/2010 |
| | | US 2010-0316362 A1 | 16/12/2010 |
| | | US 7782943 B2 | 24/08/2010 |
| | | US 7782944 B2 | 24/08/2010 |
| | | US 7782945 B2 | 24/08/2010 |
| | | US 7782946 B2 | 24/08/2010 |
| | | US 7782947 B2 | 24/08/2010 |
| | | US 7782948 B2 | 24/08/2010 |
| | | US 7782949 B2 | 24/08/2010 |
| | | US 7782950 B2 | 24/08/2010 |
| | | US 8170108 B2 | 01/05/2012 |
| | | US 8325814 B2 | 04/12/2012 |
| | | US 8363732 B2 | 29/01/2013 |
| | | US 8411744 B2 | 02/04/2013 |
| | | US 8428130 B2 | 23/04/2013 |
| | | US 8432972 B2 | 30/04/2013 |
| | | US 8457207 B2 | 04/06/2013 |
| | | US 8472519 B2 | 25/06/2013 |
| | | WO 2007-114608 A1 | 11/10/2007 |
| | | WO 2007-114609 A1 | 11/10/2007 |
| | | WO 2007-114610 A1 | 11/10/2007 |
| | | WO 2007-114611 A1 | 11/10/2007 |
| | | WO 2007-114612 A1 | 11/10/2007 |

Form PCT/ISA/210 (patent family annex) (July 2009)

INTERNATIONAL SEARCH REPORT
Information on patent family members

International application No.

**PCT/KR2013/003083**

| Patent document cited in search report | Publication date | Patent family member | Publication date |
|---|---|---|---|
| | | WO 2007-148906 A1 | 27/12/2007 |
| | | WO 2007-148907 A1 | 27/12/2007 |
| | | WO 2007-148909 A1 | 27/12/2007 |
| | | WO 2008-023967 A1 | 28/02/2008 |
| | | WO 2008-023968 A1 | 28/02/2008 |
| JP 4642075 B2 | 10/12/2010 | US 2009-0074078 A1 | 19/03/2009 |
| | | WO 2006-112139 A1 | 26/10/2006 |
| JP 2007-184791 A | 19/07/2007 | NONE | |
| US 2011-0249745 A1 | 13/10/2011 | NONE | |

Form PCT/ISA/210 (patent family annex) (July 2009)